# EUROPÄISCHE PATENTSCHRIFT

(11) **EP 2 654 918 B1**
(45) Veröffentlichungstag und Bekanntmachung des Hinweises auf die Patenterteilung: **20.07.2016**
(21) Anmeldenummer: 11807921.9
(22) Anmeldetag: 22.12.2011
(51) Int. Cl.: B01D 29/21, B01D 29/96, B01D 35/147

(54) **FLÜSSIGKEITSFILTER MIT EINEM FILTERUMGEHUNGSVENTIL UND FILTEREINSATZ DAFÜR**
LIQUID FILTER HAVING A FILTER BYPASS VALVE AND FILTER INSERT THEREFOR
FILTRE À LIQUIDES COMPRENANT UNE SOUPAPE DE DÉRIVATION DE FILTRE ET INSERT DE FILTRE POUR CELUI-CI

(30) Priorität: 22.12.2010 DE 102010063822
(43) Veröffentlichungstag der Anmeldung: 30.10.2013
(73) Patentinhaber: Hengst SE & Co. KG, 48147 Münster (DE)
(72) Erfinder: ARDES, Wilhelm, 59387 Ascheberg (DE)
(74) Vertreter: Linnemann, Winfried
(86) Internationale Anmeldenummer: PCT/EP2011/073769
(87) Internationale Veröffentlichungsnummer: WO 2012/085193

(56) Entgegenhaltungen:
- WO-A2-2009/154445
- DE-B3-102006 050 946
- DE-U1- 20 004 431
- DE-U1- 29 915 843

## Beschreibung

Die Erfindung betrifft Flüssigkeitsfilter, insbesondere Ölfilter oder Kraftstofffilter für eine Brennkraftmaschine, mit einem Gehäuse mit einem abnehmbaren Deckel, mit einem in eine Rohseite des Flüssigkeitsfilters einmündenden Einlass für zu filternde Flüssigkeit und einem von einer Reinseite des Flüssigkeitsfilters ausgehenden Auslass für gefilterte Flüssigkeit, mit einem die Rohseite und die Reinseite voneinander trennenden, auswechselbaren Filtereinsatz aus einem stirnseitig von zwei Endscheiben eingefassten hohlzylindrischen Filterstoffkörper und mit einem Filterumgehungsventil, bestehend aus einem am Filtereinsatz angeordneten Ventilsitz und einem mit dem Ventilsitz zusammenwirkenden, durch eine Vorbelastungskraft in Schließrichtung beaufschlagten Ventilkörper, wobei zwischen dem Ventilsitz und dem Ventilkörper zwei in Radialrichtung gesehen ineinander angeordnete, geschlossene Dichtkonturen vorgesehen sind und wobei durch den Ventilsitz zwischen den Dichtkonturen wenigstens ein die Rohseite und die Reinseite des Flüssigkeitsfilters unter Umgehung des Filterstoffkörpers verbindender Umgehungskanal verläuft. Außerdem betrifft die Erfindung einen Filtereinsatz für derartige Flüssigkeitsfilter.

Ein Flüssigkeitsfilter der eingangs genannten Art ist aus DE 200 04 431 U1 bekannt. Der bekannte Flüssigkeitsfilter weist eine Gehäusestruktur auf, in die der Filtereinsatz eingebaut ist. Die Gehäusestruktur kann ein gesondertes Gehäuse darstellen oder integraler Bestandteil z. B. einer Brennkraftmaschine sein. Der Filtereinsatz ist zylindrisch aufgebaut, wobei das Filterumgehungsventil im Bereich einer der Endscheiben des Filtereinsatzes untergebracht ist. Dabei ist der Ventilsitz in der Endscheibe untergebracht und der Ventilkörper ist axial beweglich in der Endscheibe des Filtereinsatzes gelagert. Andererseits ist in der Gehäusestruktur ein Stützdom vorgesehen, der zur Montage einer Feder dient, die für die Vorspannung des Filterumgehungsventils verantwortlich ist, wodurch der Öffnungsdruck definiert wird. Der Ventilkörper ist derart beweglich im Filtereinsatz befestigt, dass er beim Wech-sel des Filterelementes mit ausgewechselt wird. Dadurch kann eine unzulässig hohe Verschmutzung des Ventilkörpers, z. B. durch Rußablagerungen, vermieden werden. Die Feder verbleibt beim Auswechseln des Filterelementes im Stützdom.

Als nachteilig wird bei dem bekannten Flüssigkeitsfilter angesehen, dass der Filtereinsatz durch die Integration des Ventilkörpers relativ aufwändig und dadurch teuer wird. Als ungünstig hat sich weiterhin herausgestellt, dass die Führung des Ventilkörpers im Filtereinsatz schwierig ist und dass Verkantungen und dadurch verursachte Undichtigkeiten des Umgehungsventils nicht sicher ausgeschlossen werden können. Dieses Problem wird auch mit dadurch hervorgerufen, dass die den Ventilkörper in Schließrichtung des Filterumgehungsventils vorbelastende Feder Teil des Filtergehäuses ist und dass somit bei jedem Filtereinsatzwechsel darauf geachtet werden muss, dass die Feder und der Ventilkörper in exakte Anlage aneinander gebracht werden.

Das Dokument DE 299 15 843 U1 zeigt einen Filter, wie Ölfilter, mit einem Filtergehäuse mit einem Deckel, einem Filtereinsatz und einem zentralen Standrohr mit Ablassventilfunktion. Zusätzlich kann gemäß Anspruch 7 ein Filterumgehungsventil vorgesehen sein, dessen Ventilkörper am Deckel axial verschiebbar geführt und mit einer am Deckel abgestürzten Feder in Schließrichtung vorbelastet ist. Der Ventilsitz ist in der oberen Stirnscheibe des Filtereinsatzes angeordnet. Die das Ventil öffnende Kraft wird hier durch die Wirkung des Öldrucks auf einen im Deckel abgedichtet geführten Kragen des Ventilkörpers erzeugt.

Als nachteilig wird bei diesem bekannten Flüssigkeitsfilter angesehen, dass der Ventilkörper bei seiner axialen Bewegung einer relativ starken Reibung unterliegt, weil er mittels einer Radialdichtung gegen den Deckel abgedichtet ist. Diese Reibung kann zu Störungen der Funktion des Filterumgehungsventils oder, im Falle eines Festklebens der Dichtung des Ventilkörpers an der Führungsfläche im Deckel, sogar zu einem Funktionsausfall des Filterumgehungsventils führen.

Für die vorliegende Erfindung stellt sich daher die Aufgabe, Flüssigkeitsfilter der eingangs genannten Art anzugeben, die die Nachteile des Standes der Technik vermeiden und bei denen ein einfacherer, kostengünstigerer Filtereinsatz verwendbar ist und eine zuverlässige Funktion des Filterumgehungsventils gewährleistet ist. Außerdem soll ein entsprechender Filtereinsatz angegeben werden.

Eine erste Lösung des ersten, den Flüssigkeitsfilter betreffenden Teils der Aufgabe gelingt erfindungsgemäß mit einem Flüssigkeitsfilter der eingangs genannten Art, der dadurch gekennzeichnet ist, dass der Ventilkörper im Filtergehäuse an einem Filtergehäuseteil verschieblich geführt ist, dass die zwei Dichtkonturen in Axialrichtung gegeneinander versetzt sind und dass der Ventilkörper in seinem mit den Dichtkonturen zusammenwirkenden Dichtbereich eine entsprechende konische oder kegelige oder kalottenartige Form hat.

Erfindungsgemäß ist also der Ventilkörper ein Teil des Filtergehäuses und nicht des Filtereinsatzes, wodurch der Filtereinsatz konstruktiv wesentlich einfacher und dadurch in seiner Herstellung kostengünstiger wird. Für die verschiebliche Führung wird nun ein Filtergehäuseteil genutzt, was eine exakte Führung des Ventilkörpers vereinfacht und ein unerwünschtes Verkanten und dadurch verursachte Undichtigkeiten des Umgehungsventils verhindert. Insbesondere führt hier eine aufwändigere Gestaltung der Führung des Ventilkörpers nur einmalig zu höheren Kosten, da der Ventilkörper und seine Führung Lebensdauerbauteile des Flüssigkeitsfilters sind. Außerdem sind die zwei Dichtkonturen in Axialrichtung gegeneinander versetzt und der Ventilkörper hat in seinem mit den Dichtkonturen zusammenwirkenden Dichtbereich eine entsprechende konische oder kegelige oder kalottenartige Form. Hiermit wird vorteilhaft erreicht, dass sich der Ventilkörper und der Ventilsitz unter der auf den Ventilkörper in Schließrichtung wirkenden Vorbelastungskraft selbsttätig relativ zueinander passend ausrichten, was für eine gute und dauerhafte Dichtigkeit des Filterumgehungsventils in seiner Schließstellung sorgt. Außerdem benötigt das Filterumgehungsventil in dieser Ausführung nur einen relativ geringen Durchmesser für seinen Einbauraum, was einer kompakten Bauweise zugutekommt.

Eine zweite Lösung des ersten, den Flüssigkeitsfilter betreffenden Teils der Aufgabe gelingt erfindungsgemäß mit einem Flüssigkeitsfilter der eingangs genannten Art, der dadurch gekennzeichnet ist, dass der Ventilkörper im Filtergehäuse an einem Filtergehäuseteil verschieblich geführt ist und dass der Ventilkörper zugleich ein Sperrelement einer Montagesperre gegen den Einbau von Fremd-Filtereinsätzen bildet, wobei eine den Ventilkörper gegen eine axiale Verschiebung sperrende Riegeleinrichtung vorgesehen ist, die bei einem Einbauen eines Filtereinsatzes nur durch passende Entriegelungsmittel an einem zugehörigen Filtereinsatz entriegelbar ist.

Bei diesem erfindungsgemäßen Flüssigkeitsfilter bildet der Ventilkörper zugleich ein Sperrelement einer Montagesperre gegen den Einbau von Fremd-Filtereinsätzen, was dem Ventilkörper eine doppelte Funktion verleiht und was die Integration der Montagesperre in den Flüssigkeitsfilter ohne zusätzlichen Bauraumaufwand ermöglicht.

Bevorzugt sind in weiterer Ausgestaltung des zweiten erfindungsgemäßen Filters die zwei Dichtkonturen in Axialrichtung gegeneinander versetzt und der Ventilkörper hat in seinem mit den Dichtkonturen zusammenwirkenden Dichtbereich eine entsprechende konische oder kegelige oder kalottenartige Form. Damit wird auch bei dem zweiten erfindungsgemäßen Filter vorteilhaft erreicht, dass sich der Ventilkörper und der Ventilsitz unter der auf den Ventilkörper in Schließrichtung wirkenden Vorbelastungskraft selbsttätig relativ zueinander passend ausrichten und dass das Filterumgehungsventil nur einen relativ geringen Durchmesser für seinen Einbauraum benötigt.

Die Positionierung des Filterumgehungsventils und seiner Einzelteile innerhalb der vorstehend erläuterten Flüssigkeitsfilter kann unterschiedlich sein. Eine erste diesbezügliche bevorzugte Ausführung der Flüssigkeitsfilter sieht vor, dass sie als stehende Filter ausgeführt sind, dass der Ventilsitz an einer im Einbauzustand oberen Stirnscheibe des Filtereinsatzes angeordnet ist und dass der Ventilkörper in dem das Filtergehäuses oberseitig verschließenden Deckel geführt ist.

Eine dazu alternative bevorzugte Ausführung der Flüssigkeitsfilter schlägt vor, dass sie als stehende Filter ausgeführt sind, dass der Ventilsitz an einer im Einbauzustand oberen Stirnscheibe des Filtereinsatzes angeordnet ist und dass der Ventilkörper oben an einem in oder durch den Filtereinsatz verlaufenden, mit dem Filtergehäuse verbundenen oder einstückigen Standrohr geführt ist.

Bei einer dritten diesbezüglichen Ausgestaltung der Flüssigkeitsfilter ist vorgesehen, dass sie als stehende Filter ausgeführt sind, dass der Ventilsitz an einer im Einbauzustand unteren Stirnscheibe des Filtereinsatzes angeordnet ist und dass der Ventilkörper unten an einem in oder durch den Filtereinsatz verlaufenden, mit dem Filtergehäuse verbundenen oder einstückigen Standrohr geführt ist.

Außerdem können die Flüssigkeitsfilter nach der Erfindung auch als hängende Filter ausgeführt sein, wobei der Ventilsitz bevorzugt an einer im Einbauzustand unteren Stirnscheibe des Filtereinsatzes angeordnet ist und der Ventilkörper in dem das Filtergehäuse unterseitig verschließenden Deckel geführt ist.

Eine weitere alternative Ausführung der Flüssigkeitsfilter gemäß Erfindung schlägt vor, dass sie als hängende Filter ausgeführt sind, dass der Ventilsitz an einer im Einbauzustand oberen Stirnscheibe des Filtereinsatzes angeordnet ist und dass der Ventilkörper in dem Filtergehäuse oberhalb des Filtereinsatzes geführt ist. Diese Ausführung hat, wie die anderen Ausführungen mit einem oben im Filtergehäuse angeordneten Filterumgehungsventil, den spezifischen Vorteil, dass in der zu filternden Flüssigkeit mitgeführte Schmutzpartikel, die durch Schwerkraftwirkung absinken und sich unten im Filtergehäuse sammeln, weit vom Filterumgehungsventil entfernt sind und deshalb die Ventilfunktion nicht stören.

Für die Ausführungen der Flüssigkeitsfilter, bei denen der Ventilkörper im Deckel des Filtergehäuses geführt ist, ist bevorzugt vorgesehen, dass der Deckel eine zentrale Ablass- und/oder Entlüftungsschraube aufweist und dass der Ventilkörper in der Ablass- und/oder Entlüftungsschraube geführt ist. Hierdurch wird eine besonders kompakte Anordnung erzielt, weil für die Unterbringung des Ventilkörpers ein ohnehin vorhandener Raum innerhalb der Ablass- und/oder Entlüftungsschraube genutzt wird.

Die den Ventilkörper in Schließrichtung beaufschlagende Vorbelastungskraft ist zweckmäßig durch wenigstens eine einerseits an einem Teil des Filtergehäuses und andererseits an dem Ventilkörper abgestützte Feder, vorzugsweise Schraubenfeder, erzeugt. Die Feder bleibt vorteilhaft stets zwischen dem sie abstützenden Teil des Filtergehäuses und dem Ventilkörper angeordnet und behält dauerhaft ihren Kontakt zu den beiden Bauteilen, so dass der Ventilkörper immer exakt und zuverlässig mit der auf ihn in Schließrichtung wirkenden Kraft vorbelastet wird. Ein gewünschter Wert für die Druckdifferenz zwischen Rohseite und Reinseite des Flüssigkeitsfilters, bei der das Filterumgehungsventil öffnen soll, kann durch geeignete Auswahl der Feder festgelegt werden.

Hinsichtlich der konkreten geometrischen Gestaltung der Dichtkonturen bieten die erfindungsgemäßen Flüssigkeitsfilter eine große Gestaltungsfreiheit. Vorzugsweise sind die beiden Dichtkonturen rund ausgeführt und konzentrisch zueinander angeordnet, wobei der Ventilkörper selbstverständlich in seiner Form entsprechend angepasst ausgeführt ist. Alternativ dazu können die beiden Dichtkonturen auch anders ausgeführt sein, wobei auch hier selbstverständlich der Ventilkörper seinerseits zu den Dichtkonturen passend geformt ist.

Um eine gute Dichtigkeit des Umgehungsventils in dessen Schließstellung zu erzielen und gleichzeitig einen gewissen Toleranzausgleich zu ermöglichen, wird vorgeschlagen, dass wenigstens eine der beiden Dichtkonturen aus einem Elastomer oder mit einer Elastomerauflage ausgeführt ist. Hierdurch wird wenigstens die eine der beiden Dichtkonturen nachgiebig gestaltet, womit sowohl eine gute dichtende Anlage des Ventilkörpers als auch ein Ausgleich von Maßtoleranzen erzielt wird.

In einer weiteren Ausgestaltung des erfindungsgemäßen Flüssigkeitsfilters sind die beiden Dichtkonturen mit unterschiedlicher Härte ausgeführt. Mit anderen Worten bedeutet dies, dass die eine Dichtkontur nachgiebiger ist als die andere Dichtkontur, womit ein gewünschter Toleranzausgleich ermöglicht wird, der Undichtigkeiten weitestgehend ausschließt.

Zwecks einer einfachen und kostengünstigen Massenfertigung ist bevorzugt vorgesehen, dass die Dichtkonturen an die zugehörige Endscheibe und/oder den Ventilkörper einstückig angeformt oder an diese(n) angespritzt sind.

Eine weitere Vereinfachung der Herstellung des Filtereinsatzes kann erfindungsgemäß dadurch erreicht werden, dass bevorzugt eine im Einbauzustand des Filtereinsatzes die Rohseite und die Reinseite des Flüssigkeitsfilters voneinander trennende Dichtung zwischen dem Filtergehäuse und dem Filtereinsatz an derselben Stimscheibe des Filtereinsatzes wie die Dichtkonturen des Filterumgehungsventils angeordnet ist. Somit sind fertigungstechnisch günstig und vorteilhaft alle dichtenden Elemente an einer Stirnscheibe des Filtereinsatzes konzentriert.

Eine weitere Steigerung der Wirtschaftlichkeit bei der Fertigung des Filtereinsatzes kann erzielt werden, wenn, wie die Erfindung vorschlägt, die Dichtung zwischen der Rohseite und der Reinseite mit mindestens einer der Dichtkonturen zu einem Dichtring zusammengefasst ist.

Zur Erzielung einer günstigen geometrischen Anordnung des Umgehungsventils ist erfindungsgemäß weiter bevorzugt vorgesehen, dass der Filtereinsatz an der den Ventilsitz aufweisenden Stirnscheibe einen axial und schräg radial nach außen verlaufenden Kragen aufweist, dessen axial nach außen weisende Seite den Ventilsitz mit den zwei Dichtkonturen bildet, und dass durch den Kragen zwischen den Dichtkonturen der mindestens eine Filterumgehungskanal verläuft.

Vorteilhaft kann dabei der Kragen einstückig mit der zugehörigen Stirnscheibe ausgeführt sein, was für eine kostengünstige Massenfertigung zweckmäßig ist. Alternativ dazu kann der Kragen als separates Bauteil gefertigt und mit der zugehörigen Stirnscheibe verbunden, vorzugsweise verschweißt oder verklebt oder verklipst oder verrastet, sein. Diese Ausführung bietet die Möglichkeit einer bedarfsweisen Nachrüstung von vorhandenen, gängigen Filtereinsätzen mit dem Ventilsitz, so dass der Filtereinsatz an sich in großer Stückzahl unverändert gefertigt und dann wahlweise ohne oder mit Ventilsitz verwendet werden kann. Der Kragen kann dabei auch z.B. mit einem Stützgitter für den Filterstoffkörper des Filtereinsatzes zu einem Bauteil zusammengefasst sein.

Weiterhin betrifft die Erfindung einen Filtereinsatz für einen Flüssigkeitsfilter nach einem der vorhergehenden Ansprüche, insbesondere Ölfilter oder Kraftstofffilter für eine Brennkraftmaschine, mit einem stirnseitig von zwei Endscheiben eingefassten hohlzylindrischen Filterstoffkörper und mit einem an einer der Stirnscheiben angeordneten Ventilsitz eines Filterumgehungsventils mit zwei in Radialrichtung gesehen ineinander angeordneten, geschlossenen Dichtkonturen, wobei durch den Ventilsitz zwischen den Dichtkonturen wenigstens ein den Filterstoffkörper umgehender Umgehungskanal verläuft.

Die Lösung des zweiten, den Filtereinsatz betreffenden Teils der oben gestellten Aufgabe gelingt erfindungsgemäß mit einem Filtereinsatz der vorstehend genannten Art, der dadurch gekennzeichnet ist, dass er ventilkörperfrei ausgeführt ist.

Der Filtereinsatz ist somit durch den Wegfall des Ventilkörpers technisch einfach ausführbar und kostengünstig herstellbar, so dass beim regelmäßig wiederkehrenden Austausch des Filtereinsatzes nur jeweils ein relativ preiswertes Element eingesetzt wird. Hierdurch werden über die gesamte Einsatzzeit des zugehörigen Flüssigkeitsfilters Kosten eingespart.

Vorteilhafte Ausgestaltungen und Weiterbildungen des Filtereinsatzes gemäß der vorliegenden Erfindung sind in den Patentansprüchen 19 bis 31 angegeben, mit denen die vorstehend schon im Zusammenhang mit dem Flüssigkeitsfilter beschriebenen Vorteile erzielt werden.

Die Ausgestaltungen des Filtereinsatzes nach der Erfindung sehen, entsprechend den Ansprüchen 19 bis 31 einzeln oder in Kombination miteinander, insbesondere vor,
- dass die zwei Dichtkonturen in Axialrichtung gegeneinander versetzt sind,
- dass die beiden Dichtkonturen rund ausgeführt und konzentrisch zueinander angeordnet sind,
- dass wenigstens eine der beiden Dichtkonturen aus einem Elastomer oder mit einer Elastomerauflage ausgeführt ist,
- dass die beiden Dichtkonturen mit unterschiedlicher Härte ausgeführt sind,
- dass die Dichtkonturen an die zugehörige Endscheibe einstückig angeformt oder an diese angespritzt sind,
- dass eine im eingebauten Zustand des Filtereinsatzes eine Rohseite und eine Reinseite des Flüssigkeitsfilters voneinander trennende Dichtung an derselben Stirnscheibe des Filtereinsatzes wie die Dichtkonturen des Filterumgehungsventils angeordnet ist,
- dass die Dichtung zwischen der Rohseite und der Reinseite mit mindestens einer der Dichtkonturen zu einem Dichtring zusammengefasst ist,
- dass der Filtereinsatz an der den Ventilsitz aufweisenden Stirnscheibe einen axial und schräg radial nach außen verlaufenden Kragen aufweist, dessen axial nach außen weisende Seite den Ventilsitz mit den zwei Dichtkonturen bildet, und dass durch den Kragen zwischen den Dichtkonturen der mindestens eine Umgehungskanal verläuft,
- dass der Kragen einstückig mit der zugehörigen Stirnscheibe ausgeführt ist oder dass der Kragen als separates Bauteil gefertigt und mit der zugehörigen Stirnscheibe verbunden, vorzugsweise verschweißt oder verklebt oder verklipst oder verrastet, ist, und/oder
- dass der als separates Bauteil gefertigte Kragen ein Stützgitter für den Filterstoffkörper des Filtereinsatzes umfasst.

Eine weitere Ausführung des Filtereinsatz nach der Erfindung sieht an dem Filtereinsatz Entriegelungsmittel vor, mittels welchen bei einem Einbauen des Filtereinsatzes in einen zugehörigen Flüssigkeitsfilter eine Riegeleinrichtung entriegelbar ist, die einen zugleich ein Sperrelement einer Montagesperre gegen den Einbau von Fremd-Filtereinsätzen bildenden Ventilkörper gegen axiale Verschiebung sperrt. Der Filtereinsatz erhält hier die zusätzliche Funktion eines Schlüssels, mit dem die Riegeleinrichtung entriegelbar ist. Ein Einbauen eines Fremd-Filtereinsatzes, der diese Schlüsselfunktion nicht aufweist, wird so ausgeschlossen.

Eine konkrete diesbezügliche Weiterbildung ist dadurch gekennzeichnet, dass die Entriegelungsmittel durch eine oder mehrere radial nach innen weisende Nasen gebildet sind, die am Innenumfang einer zentralen Durchbrechung in einer der Stirnscheiben angeordnet sind. Die Entriegelungsmittel sind so platzsparend und beschädigungssicher untergebracht.

Bevorzugt sind dabei die zwei Dichtkonturen und die Entriegelungsmittel alle an einer der zwei Endscheiben des Filtereinsatzes vorgesehen, wodurch eine konzentrierte Anordnung bei kompakter Bauweise erzielt wird.

Im Folgenden werden Ausführungsbeispiele der Erfindung anhand einer Zeichnung erläutert. Die Figuren der Zeichnung zeigen:
- Figur 1: einen Flüssigkeitsfilter mit einem Filterumgehungsventil in einer ersten Ausführung, in einem Teil-Längsschnitt,
- Figur 2: einen Gehäusedeckel des Flüssigkeitsfilters aus Figur 1, in Ansicht auf seine Innenseite,
- Figur 3: den Deckel aus Figur 2 im Längsschnitt,
- Figur 4: einen Filtereinsatz des Flüssigkeitsfilters aus Figur 1, in Ansicht,
- Figur 5: den Filtereinsatz aus Figur 4 in einem Teil-Längsschnitt durch seinen oberen Teil,
- Figur 6: einen Ausschnitt aus dem Filtereinsatz gemäß Figur 5 in vergrößerter Darstellung,
- Figur 7: den Flüssigkeitsfilter aus Figur 1 in einem Teil-Längsschnitt, mit geöffnetem Filterumgehungsventil,
- Figur 8: den Flüssigkeitsfilter mit Filterumgehungsventil in einer zweiten Ausführung, in einem Teil-Längsschnitt,
- Figur 9: einen Gehäusedeckel des Flüssigkeitsfilters aus Figur 8, in Ansicht auf seine Außenseite,
- Figur 10: den Deckel aus Figur 9 in Ansicht auf seine Innenseite,
- Figur 11: den Deckel aus Figur 10 zusammen mit einer vom Deckel gelösten Ablassschraube mit einem Ventilkörper des Filterumgehungsventils, in Ansicht,
- Figur 12: den Deckel und die Ablassschraube aus Figur 11 jeweils im Längsschnitt,
- Figur 13: den Deckel und die Ablassschraube aus Figur 12 in zusammengebautem Zustand, im Längsschnitt,
- Figur 14: den Flüssigkeitsfilter aus Figur 8 mit geöffnetem Filterumgehungsventil, in einem Teil-Längsschnitt,
- Figur 15: den Flüssigkeitsfilter mit Filterumgehungsventil in einer dritten Ausführung, im Längsschnitt,
- Figur 16: den Flüssigkeitsfilter aus Figur 15 ohne Filtereinsatz und ohne Deckel, mit aufgeschnittenem Gehäuse,
- Figur 17: einen Filtereinsatz des Flüssigkeitsfilters gemäß Figur 15, in Ansicht,
- Figur 18: den Filtereinsatz aus Figur 17 im Längsschnitt,
- Figur 19: eine untere Stirnscheibe des Filtereinsatzes aus Figur 17 und 18 in einem vergrößerten Längsschnitt,
- Figur 20: den Flüssigkeitsfilter aus Figur 15 in einem Längsschnitt durch seinen unteren Teil,
- Figur 21: einen vergrößerten Ausschnitt mit dem Filterumgehungsventil aus Figur 20,
- Figur 22: den Flüssigkeitsfilter aus Figur 15 mit einem geänderten Filterumgehungsventil, in einem Längsschnitt durch seinen unteren Teil,
- Figur 23: einen vergrößerten Ausschnitt mit dem Filterumgehungsventil aus Figur 22,
- Figur 24: den Flüssigkeitsfilter aus Figur 15 mit einem nochmals geänderten Filterumgehungsventil, in einem Längsschnitt durch seinen unteren Teil,
- Figur 25: einen vergrößerten Ausschnitt mit dem Filterumgehungsventil aus Figur 24,
- Figur 26: den Flüssigkeitsfilter aus Figur 15 mit geöffnetem Filterumgehungsventil, im Teil-Längsschnitt,
- Figur 27: ein Filtergehäuse mit einem zugleich ein Sperrelement einer Montagesperre bildenden Ventilkörper des Filterumgehungsventils, im Längsschnitt,
- Figur 28: ein Standrohr als Teil des Filtergehäuses und den Ventilkörper aus Figur 27, als Einzelteile in Ansicht,
- Figur 29: den Flüssigkeitsfilter mit dem Filtergehäuse aus Figur 27 beim Einbauen eines zugehörigen, passenden Filtereinsatzes, im Längsschnitt,
- Figur 29a: den Flüssigkeitsfilter mit einem in seinem unteren Teil gegenüber Figur 29 geänderten Filtergehäuse, ebenfalls beim Einbauen eines zugehörigen, passenden Filtereinsatzes, im Längsschnitt,
- Figur 30: den aus dem Filtergehäuse, dem Gehäusedeckel und dem Filtereinsatz aus Figur 29 zusammengebauten, kompletten Flüssigkeitsfilter, im Längsschnitt,
- Figur 31: das Filtergehäuse aus Figur 27 beim Versuch des Einbauens eines nicht passenden Fremd-Filtereinsatzes, im Längsschnitt,
- Figur 32: einen als separates Bauteil ausgebildeten Kragen mit einem Ventilsitz für das Filterumgehungsventil, in Ansicht,
- Figur 33: den Kragen aus Figur 32 in mit einem Filtereinsatz verbundenem Zustand, im Längsschnitt,
- Figur 34: einen Kragen mit einem Ventilsitz für das Filterumgehungsventil zusammen mit einem damit einstückig ausgeführten Stützgitter, in Ansicht,
- Figur 35: den Kragen und das Stützgitter aus Figur 34 in mit einem Filtereinsatz verbundenem Zustand, im Längsschnitt, und
- Figur 36: den Flüssigkeitsfilter mit Filterumgehungsventil in einer weiteren, letzten Ausführung, im Längsschnitt.

In der nachfolgenden Figurenbeschreibung werden gleiche Teile stets mit den gleichen Bezugsziffern bezeichnet, so dass nicht zu jeder Figur alle Bezugsziffern erläutert werden müssen.

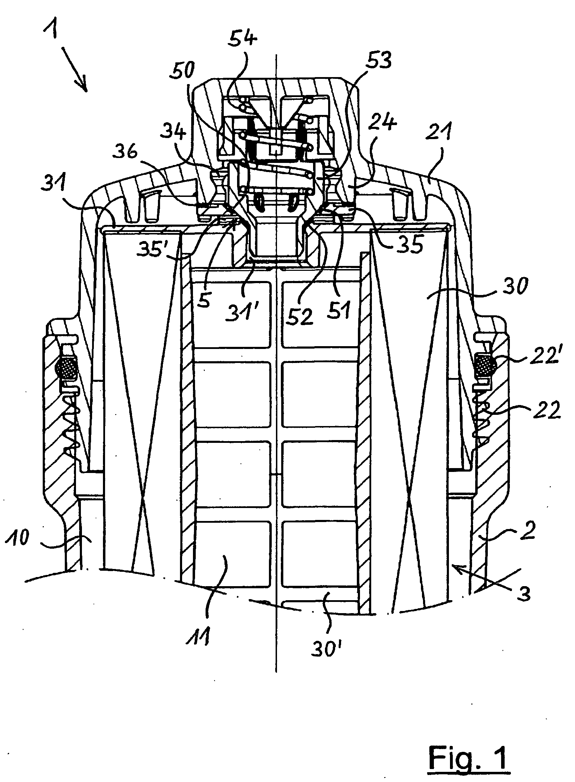

Figur 1 der Zeichnung zeigt ein erstes Ausführungsbeispiel eines Flüssigkeitsfilters 1 mit einem Filterumgehungsventil 5. Der Flüssigkeitsfilter 1 besitzt ein becherförmiges Gehäuse 2, von dem in Figur 1 nur der obere Teil sichtbar ist. Mit dem Gehäuse 2 ist ein Deckel 21 lösbar verbunden, hier über eine Verschraubung 22 mit einer zugeordneten Dichtung 22'. In Inneren des Gehäuses 2 ist ein Filtereinsatz 3 angeordnet, der aus einem hohlzylindrischen Filterstoffkörper 30 und zwei diesen stirnseitig einschließende Stirnscheiben besteht, von denen hier nur eine obere Stirnscheibe 31 sichtbar ist. Im Inneren des Filtereinsatzes 3 ist ein Stützgitter 30' angeordnet, welches den Filterstoffkörper 30 bei seiner Durchströmung gegen ein Kollabieren unterstützt.

An seiner Unterseite besitzt der Deckel 21 einen einstückig angeformten Rastring 24, der mit Rastzungen 34 zusammenwirkt, die an der Oberseite der oberen Stirnscheibe 31 des Filtereinsatzes 3 angeformt sind. Hierüber ist der Filtereinsatz 3 mit dem Deckel 21 lösbar verrastet.

Das Filterumgehungsventil 5 umfasst einen an der oberen Stirnscheibe 31 angeordneten Ventilsitz 50 und einen im Deckel 21 axial verschieblich geführten Ventilkörper 53. Der Dichtsitz 50 umfasst hier zwei zueinander konzentrische und in Radialund Axialrichtung voneinander beabstandete Dichtkonturen 51 und 52, die an der nach oben weisenden Seite eines einstückig mit der oberen Stirnscheibe 31 ausgebildeten Kragens 35 angeordnet sind. Durch den Kragen 35 verläuft radial von außen nach innen mindestens ein Umgehungskanal 35', der zwischen den beiden Dichtkonturen 51 und 52 ausmündet. Somit sind an dem Filtereinsatz 3 nur der Dichtsitz 50 und der mindestens eine Umgehungskanal 35' ausgebildet, wogegen der Ventilkörper 53 nicht Teil des Filtereinsatzes 3 ist, sondern ein Teil des Deckels 21 ist, der seinerseits einen Teil des Filtergehäuses 2 bildet.

Der mit dem Dichtsitz 50 zusammenwirkende Ventilkörper 53 ist in seiner äußeren Form an die Anordnung der Dichtkonturen 51 und 52 so angepasst, dass er in seiner in Figur 1 gezeigten Schließstellung dichtend an beiden Dichtkonturen 51 und 52 anliegt. In diese Schließstellung wird der Ventilkörper 53 durch eine Schraubenfeder 54 gedrückt, die einerseits an der Unterseite des Deckels 21 und anderseits an der. Oberseite des Ventilkörpers 53 abgestützt ist. In der gezeigten Schließstellung des Filterumgehungsventils 5 ist der Umgehungskanal 35' oder sind die Umgehungskanäle 35' verschlossen. In diesem Zustand strömt eine zu filternde Flüssigkeit von einer Rohseite 10 des Filters 1 radial von außen nach innen durch den Filterstoffkörper 30 auf eine Reinseite 11 des Filters 1.

Über einen in der Zeichnung nicht sichtbaren Flüssigkeitszulauf wird die zu filternde Flüssigkeit der Rohseite 10 zugeführt; über einen in Figur 1 ebenfalls nicht sichtbaren Ablauf wird die gefilterte Flüssigkeit abgeführt.

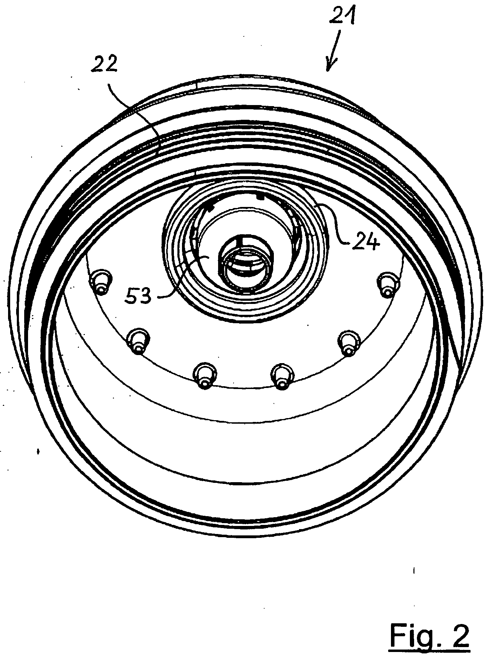

Figur 2 zeigt den Deckel 21 aus Figur 1 in einer Ansicht auf seiner Unterseite. Zentral im Deckel 21 liegt der umlaufende Rastring 24, der den im Deckel 21 axial verschieblich geführten Ventilkörper 53 umgibt. Radial außen am Deckel 21 ist ein Außengewinde für die Verschraubung 22 sichtbar.

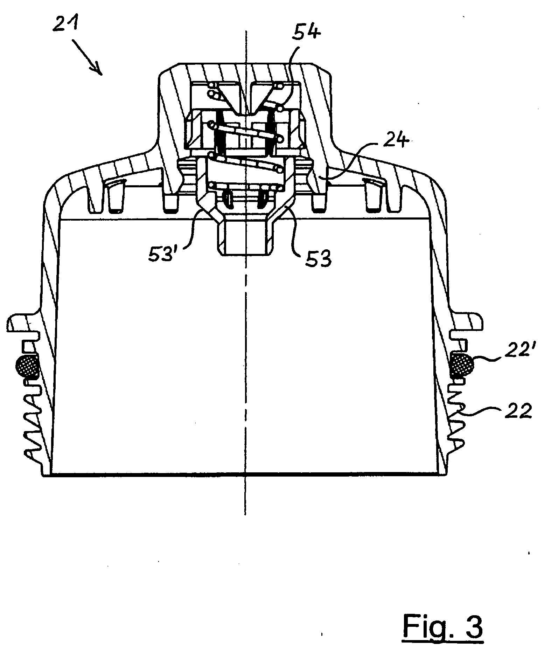

Figur 3 zeigt den Deckel 21 aus Figur 2 im Längsschnitt. Zentral im oberen Teil des Deckels 21 ist der Ventilkörper 53 axial verschieblich sowie unverlierbar geführt und zwischen dem Deckel 21 und dem Ventilkörper 53 ist die Schraubenfeder 54 angeordnet, die den Ventilkörper 53 in Schließrichtung mit einer Vorbelastungskraft beaufschlagt. Ein konisch verlaufender äußerer Oberflächenbereich des Ventilkörpers 53 bildet dessen Dichtbereich 53', der mit dem an dem hier nicht gezeigten Filtereinsatz 3 vorgesehenen Ventilsitz 50 zusammenwirkt. Außen am unteren Teil des Deckels 21 sind wieder das Außengewinde für die Verschraubung 22 und die Dichtung 22' sichtbar.

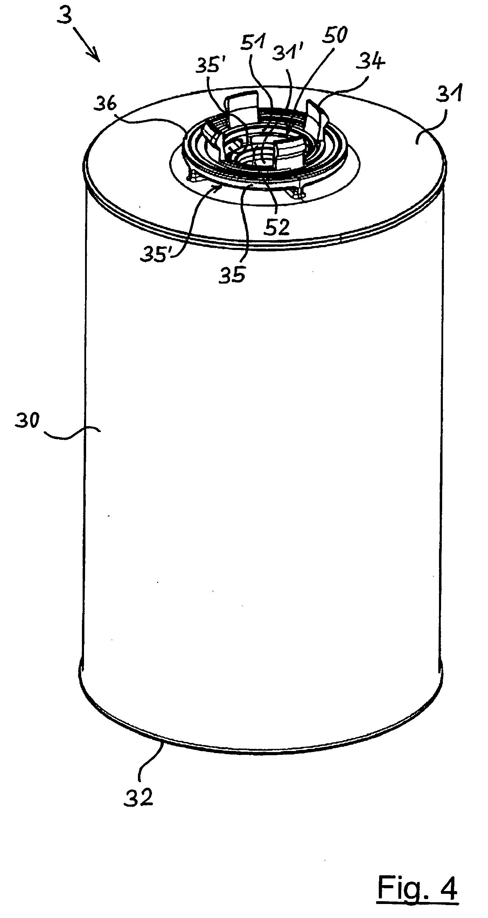

Die Figur 4 der Zeichnung zeigt in einer perspektivischen Ansicht schräg von oben den Filtereinsatz 3 des Flüssigkeitsfilters 1 aus Figur 1. Der Filtereinsatz 3 besteht aus dem hohlzylindrischen Filterstoffkörper 30 und den beiden Stirnscheiben 31 und 32, die dichtend mit dem Filterstoffkörper 30 verbunden, beispielsweise verklebt oder verschweißt, sind. In der oberen Stirnscheibe 31 ist eine zentrale Durchbrechung 31' vorgesehen, die von dem Kragen 35 umgeben ist. Durch den Kragen 35 verlaufen mehrere in Radialrichtung ausgerichtete Umgehungskanäle 35' von außen nach innen. Innen münden die Umgehungskanäle 35' zwischen den beiden konzentrischen Dichtkonturen 51 und 52 des Ventilsitzes 50 aus. Außerdem sind an dem Kragen 35 die Rastzungen 34 angeformt, über die der Filtereinsatz 3 mit dem hier nicht gezeigten Deckel 21 verrastbar ist.

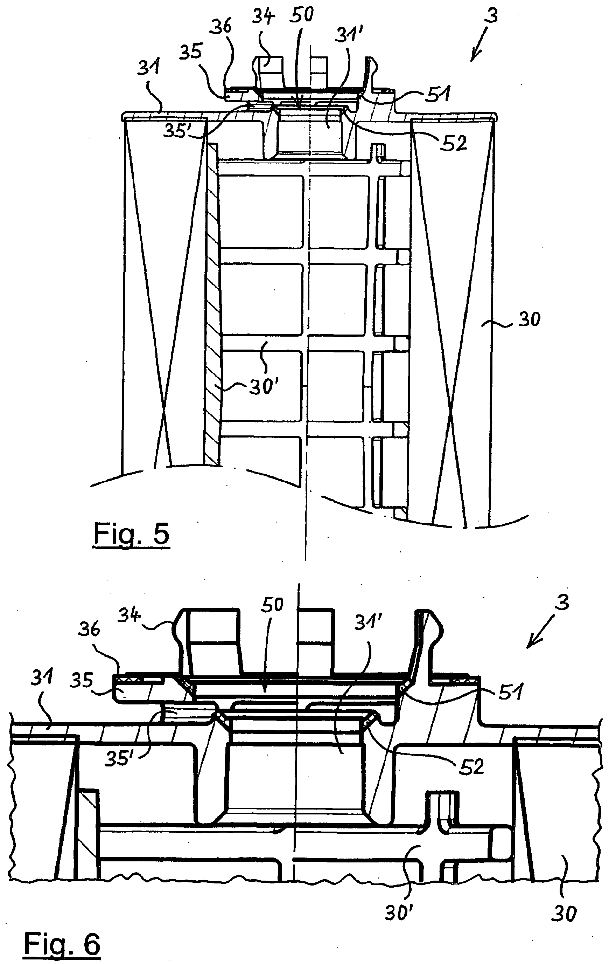

Figur 5 zeigt den Filtereinsatz 3 aus Figur 4 in einem Längsschnitt durch seinen oberen Teil. Von dem Filterstoffkörper 30 und dem darin angeordneten Stützgitter 30' ist hier jeweils nur der obere Teil dargestellt. Insofern ist auch hier nur die obere Stirnscheibe 31 sichtbar, die einstückig mit dem axial nach oben vorragenden Kragen 35 ausgebildet ist. Durch den Kragen 35 verläuft radial von außen nach innen der mindestens eine Umgehungskanal 35', der an seinem radial inneren Ende zwischen den beiden Dichtkonturen 51 und 52 des Dichtsitzes 50 ausmündet. Nach oben hin erstrecken sich von dem Kragen 35 die Rastzungen 34 weg.

In Figur 6 ist der zentrale Teil der oberen Stirnscheibe 31 des Filtereinsatzes 3 aus Figur 5 vergrößert dargestellt. Unter der Stirnscheibe 31 ist noch ein kleiner Teil des Filterstoffkörpers 30 und des Stützgitters 30' erkennbar. Im Zentrum der Stirnscheibe 31 liegt deren zentrale Durchbrechung 31', die von dem Kragen 35 umgeben ist. Radial innen sind an dem Kragen 35 die beiden konzentrischen, axial übereinander angeordneten Dichtkonturen 51 und 52 ausgebildet, die mit dem hier nicht dargestellten Ventilkörper 53 zusammenwirken. Durch den Kragen 35 verläuft hier wieder der mindestens eine Umgehungskanal 35' radial von außen nach innen, der radial innen zwischen den Dichtkonturen 51 und 52 ausmündet. In Axialrichtung nach oben erstrecken sich von dem Kragen 35 die Rastzungen 34 weg.

Radial außen auf der Oberseite des Kragens 35 ist ein Dichtring 36 angeordnet, der dazu dient, im eingebauten Zustand des Filtereinsatzes 3 die Rohseite 10 von der Reinseite 11 des Flüssigkeitsfilters 1 zu trennen.

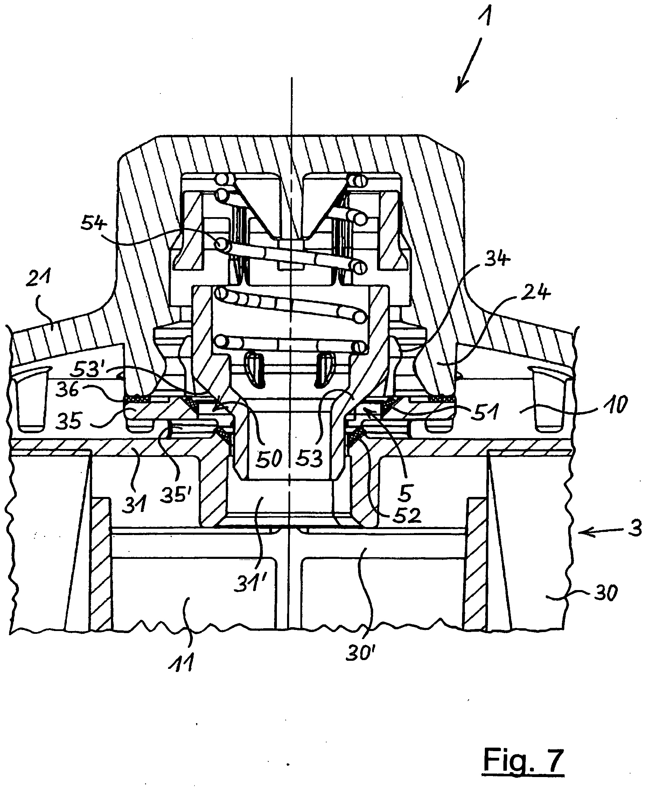

Figur 7 zeigt den das Filterumgehungsventil 5 enthaltenden oberen zentralen Teil des Flüssigkeitsfilters 1 aus Figur 1 in einem vergrößerten Längsschnitt, nun mit geöffnetem Filterumgehungsventil 5. In seinem Öffnungszustand ist der ringförmige Ventilkörper 53 durch eine Flüssigkeitsdruckdifferenz, die einen vorgebbaren Grenzwert überschreitet, gegen die Kraft der Feder 54 nach oben hin, das heißt von seinem Ventilsitz 50 weg, verschoben. Hierdurch wird der mindestens eine Umgehungskanal 35' von der Rohseite 10 zur Reinseite 11 des Filters 1 geöffnet und es kann ein unmittelbares Überströmen der Flüssigkeit erfolgen. Dieser Zustand tritt insbesondere dann ein, wenn der Filterstoffkörper 30 durch darin zurückgehaltene Schmutzpartikel soweit verstopft ist, dass eine ausreichende Durchlässigkeit für die Flüssigkeit nicht mehr gegeben ist.

Über den Rastring 24 an der Unterseite des Deckels 21 und die Rastzungen 34 an der Oberseite der Stirnscheibe 31 ist der Filtereinsatz 3 mit dem Deckel 21 verrastet, so dass diese beiden Teile des Filters 1 gemeinsam gehandhabt werden können, insbesondere bei einem Filtereinsatzwechsel.

Weiterhin zeigt die Figur 7 die Funktion der Dichtung 36, die an der Oberseite des Kragens 35 angeordnet ist und die nun in dichtender Anlage an der unteren Stirnseite des Rastrings 24 des Deckels 21 liegt. Hierdurch ist die Rohseite 10 gegen die Reinseite 11 des Filters 1 abgedichtet. Im normalen Betrieb des Filters 1 kann, solange das Filterumgehungsventil 5 geschlossen ist, die zu filternde Flüssigkeit von der Rohseite 10 nur durch den Filterstoffkörper 30 zur Reinseite 11 strömen, da eine unmittelbare Verbindung durch die Dichtung 36 versperrt ist. Eine unmittelbare Verbindung von der Rohseite 10 zur Reinseite 11 wird erst bei einem Öffnen des Filterumgehungsventils 5 freigegeben.

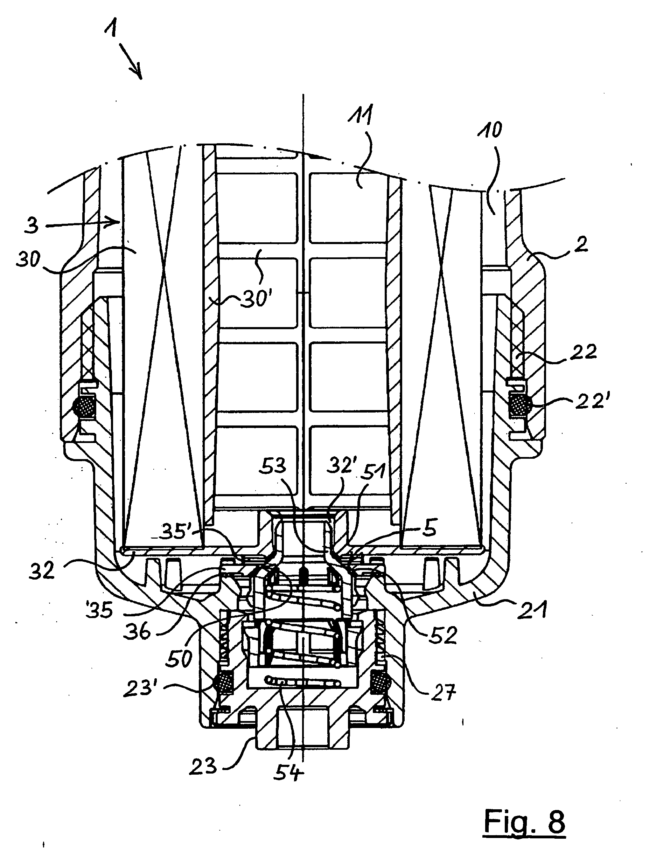

Das zuvor anhand der Figuren 1 bis 7 beschriebene Ausführungsbeispiel betrifft einen stehenden Flüssigkeitsfilter. Im Unterschied dazu ist in den Figuren 8 bis 14 ein hängender Flüssigkeitsfilter 1 als weiteres Ausführungsbeispiel dargestellt. Auch der hängende Flüssigkeitsfilter 1 besitzt ein Filtergehäuse 2, wobei dieses hier an seiner Unterseite mit einem Deckel 21 verschlossen ist, der mit dem Filtergehäuse 2 wieder über eine Verschraubung 22 mit eingelegter Dichtung 22' lösbar verbunden ist.

In Inneren des Filtergehäuses 2 ist wieder ein Filtereinsatz 3 angeordnet, der auch hier aus einem hohlzylindrischen Filterstoffkörper 30 mit einer oberen Stirnscheibe (hier nicht sichtbar) und einer unteren Stirnscheibe 32 sowie einem in seinem Inneren angeordneten Stützgitter 30' besteht. Die untere Stirnscheibe 32 besitzt eine zentrale Durchbrechung 32', die von einem Kragen 35 umgeben ist, welcher hier axial vorragend an der Unterseite der unteren Stirnscheibe 32 einstückig angeformt ist. Durch den Kragen 35 verläuft wieder in Radialrichtung von außen nach innen der mindestens eine Umgehungskanal 35'. Radial innen ist an dem Kragen 35 wieder ein Ventilsitz 50 mit zwei zueinander konzentrischen runden Dichtkonturen 51 und 52 vorgesehen, wobei auch hier die Dichtkonturen 51 und 52 in Axialrichtung voneinander beabstandet sind. Das radial innere Ende des Umgehungskanals 35' liegt zwischen den beiden Dichtkonturen 51 und 52.

Der Deckel 21 besitzt hier in seinem Zentrum eine Einschrauböffnung 27 mit einem Innengewinde, in die eine Ablassschraube 23 von unten her unter Zwischenlage einer Dichtung 23' eingeschraubt ist. In der Ablassschraube 23 ist axial verschieblich ein ringförmiger Ventilkörper 53 geführt, der mit den Dichtkonturen 51 und 52 des Ventilsitzes 50 dichtend zusammenwirkt, wenn er sich, wie in Figur 8 dargestellt, in seiner Schließstellung befindet. In diesem Zustand des Filterumgehungsventils 5 ist der Umgehungskanal 35' flüssigkeitsdicht verschlossen. Zu filternde Flüssigkeit kann dann von der Rohseite 10 des Filters 1 nur durch den Filterstoffkörper 30 zur Reinseite 11 des Filters 1 fließen. In seiner Schließstellung wird der Ventilkörper 53 durch die Kraft einer Feder 54 gehalten, die einerseits an der Oberseite der Ablassschraube 23 und andererseits an der Unterseite des Ventilkörpers 53 abgestützt ist.

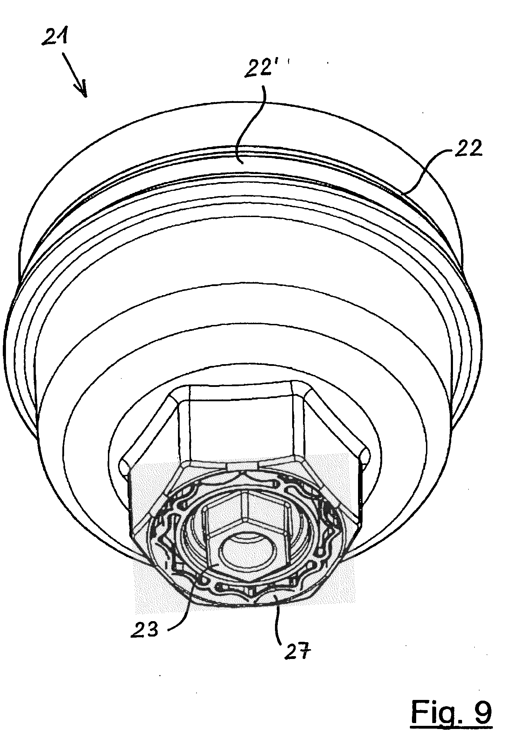

In Figur 9 ist der Deckel 21 des Flüssigkeitsfilters 1 aus Figur 8 als Einzelteil in einer Ansicht schräg von unten gezeigt. Im Zentrum des Deckels 21 ist die Ablassschraube 23 sichtbar, die in die zentral im Deckel liegende Einschrauböffnung 27 eingeschraubt ist. Im oberen Bereich des Außenumfangs des Deckels 21 liegt die Verschraubung 22 mit dem Dichtring 22'.

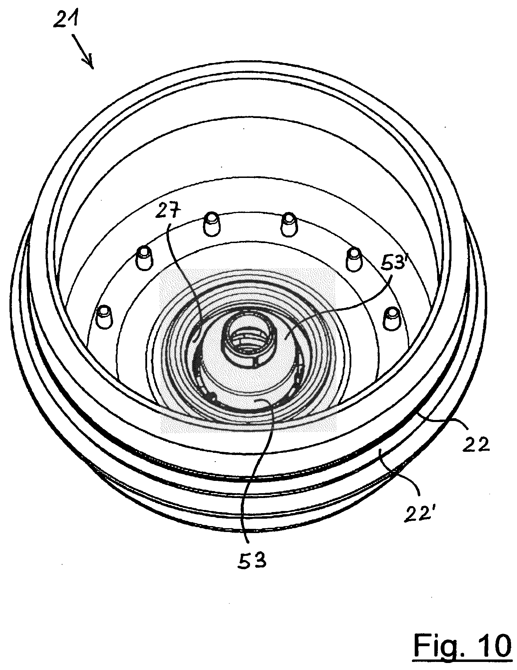

Die Figur 10 zeigt den Deckel 21 aus Figur 9 nun in einer Ansicht auf seine in Figur 8 nach oben weisende Seite, so dass der Blick nun in das Innere des Deckels 21 fällt. Im Zentrum des Deckels 21 liegt die Einschrauböffnung 27, in die die Ablassschraube 23 mit dem Ventilkörper 53 eingeschraubt ist. Dem Betrachter zugewandt ist nun der konische oder kegelförmige Dichtbereich 53' des Ventilkörpers 53. Radial außen am Deckel 21 liegt die Verschraubung 22 mit dem Dichtring 22'.

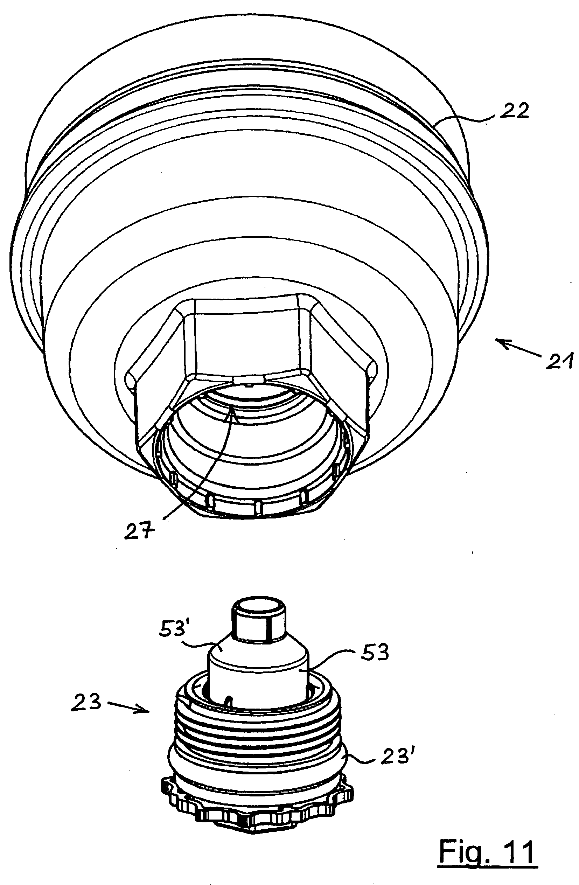

In Figur 11 sind der Deckel 21 und die Ablassschraube 23 in voneinander getrenntem Zustand gezeigt. Oben in Figur 11 ist der Deckel 21 mit seiner nun offenen zentralen Einschrauböffnung 27 und seinem Außengewinde für die Verschraubung 22 sichtbar. Unten in Figur 11 ist die aus der Einschrauböffnung 27 herausgedrehte Ablassschraube 23 dargestellt, die an ihrem Außenumfang ein Gewinde und einen Dichtring 23' trägt. Im Inneren der Ablassschraube 23 ist der Ventilkörper 53 axial verschieblich geführt, wobei ein oberer Teil des Ventilkörpers 53 mit dem Dichtbereich 53' aus der Ablassschraube 23 axial vorsteht.

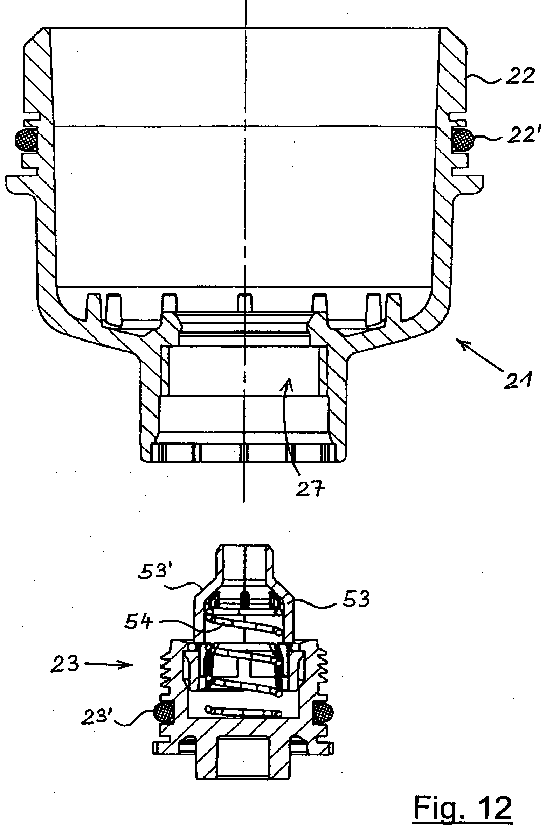

Figur 12 zeigt den Deckel 21 und die Ablassschraube 23 aus Figur 11 nun jeweils im Längsschnitt, wieder in einem voneinander getrennten Zustand. Ein Herausdrehen der Ablassschraube 23 aus dem Deckel 21 erfolgt beispielsweise zum Zweck eines Entleerens des Filtergehäuses 2 vor einem Filtereinsatzwechsel.

Oben in Figur 12 ist wieder der Deckel 21 mit seiner zentralen Einschrauböffnung 27 und mit seinem Außengewinde für die Verschraubung 22 und mit dem Dichtring 22' sichtbar.

Unten in Figur 12 ist nun die Ablassschraube 23 im Längsschnitt sichtbar, wobei die axiale Führung des Ventilkörpers 53 im Inneren der Ablassschraube 23 deutlich wird. Die Feder 54 beaufschlagt den Ventilkörper 53 mit einer in Schließrichtung wirkenden Vorbelastungskraft. An der nach oben weisenden Seite des Ventilkörpers 53 ist dessen Dichtbereich 53' angeordnet.

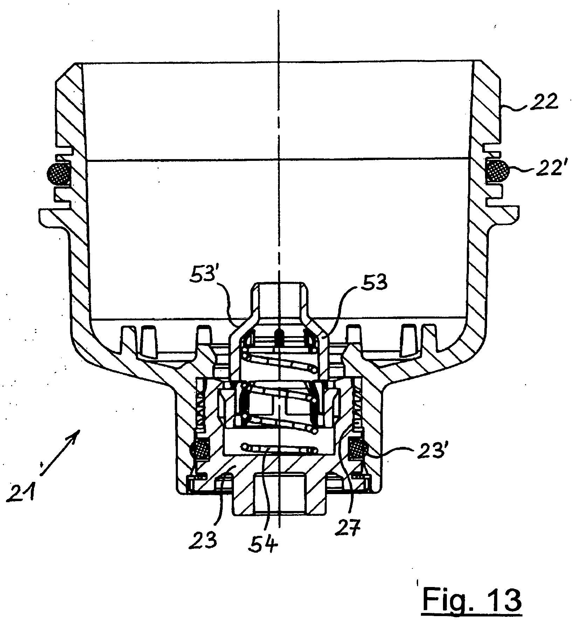

Figur 13 zeigt im Längsschnitt den Deckel 21 und die Ablassschraube 23 aus Figur 12, nun in zusammengebautem Zustand. Die Ablassschraube 23 ist nun in die Einschrauböffnung 27 vollständig eingeschraubt und die Ablassschraube 23 und der Deckel 21 sind gegeneinander durch die Dichtung 23' flüssigkeitsdicht abgedichtet. Im Inneren der Ablassschraube 23 ist der Ventilkörper 53 mit seinem konischen Dichtbereich 53' axial verschieblich, jedoch unverlierbar geführt. Die Feder 54, die teils im Inneren der Ablassschraube 23 und teils im Inneren des ringförmigen Ventilkörpers 53 angeordnet ist, übt eine Vorbelastungskraft in Schließrichtung auf den Ventilkörper 53 aus.

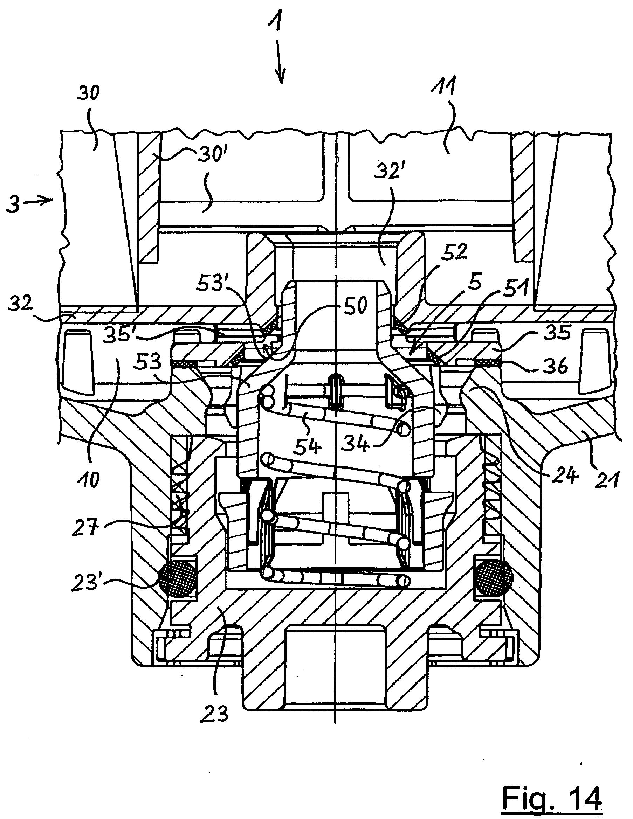

Figur 14 zeigt einen das Filterumgehungsventil 5 enthaltenden Ausschnitt aus dem Flüssigkeitsfilter 1 gemäß Figur 8 in vergrößerter Schnittdarstellung, wobei hier das Filterumgehungsventil 5 geöffnet ist. Oben in Figur 14 ist ein kleiner Teil des Filtereinsatzes 3 mit dem Filterstoffkörper 30, dem Stützgitter 30' und der unteren Stimscheibe 32 erkennbar. Unten in Figur 14 liegt der zentrale Teil des Deckels 21 mit der in dessen Einschrauböffnung 27 eingeschraubten Ablassschraube 23.

Zentral in der unteren Stirnscheibe 32 ist die Durchbrechung 32' angeordnet, die axial unten, also an der Unterseite der Stirnscheibe 32, von dem Kragen 35 mit dem daran vorgesehenen Ventilsitz 50 mit den beiden Dichtkonturen 51 und 52 umgeben ist. Durch den Kragen 35 verläuft der mindestens eine Umgehungskanal 35', der radial innen zwischen den Dichtkonturen 51 und 52 ausmündet.

Der in der Ablassschraube 23 axial verschieblich geführten Ventilkörper 53 ist hier gegen die Kraft der Feder 54 durch einen einen Grenzwert überschreitenden Flüssigkeitsdruck beziehungsweise eine einen Grenzwert überschreitende Druckdifferenz zwischen Rohseite 10 und Reinseite 11 nach unten hin und somit von dem Dichtsitz 50 und den Dichtkonturen 51 und 52 weg verschoben. Hierdurch wird der Umgehungskanal 35' geöffnet und es wird eine unmittelbare Strömungsverbindung für die Flüssigkeit von der Rohseite 10 zur Reinseite 11 unter Umgehung des Filterstoffkörpers 30 freigegeben.

An der zum Filtereinsatz 3 weisenden Seite des Deckels 21 ist auch hier ein Rastring 24 angeformt, der mit Rastzungen 34 rastend zusammenwirkt, die sich von dem Kragen 35 in Axialrichtung nach unten erstrecken. Weiterhin ist in Figur 14 die Dichtung 36 erkennbar, die hier radial außen an der Unterseite des Kragens 35 angebracht ist und die mit der Stirnseite des Rastrings 34 des Deckels 21 dichtend zusammenwirkt.

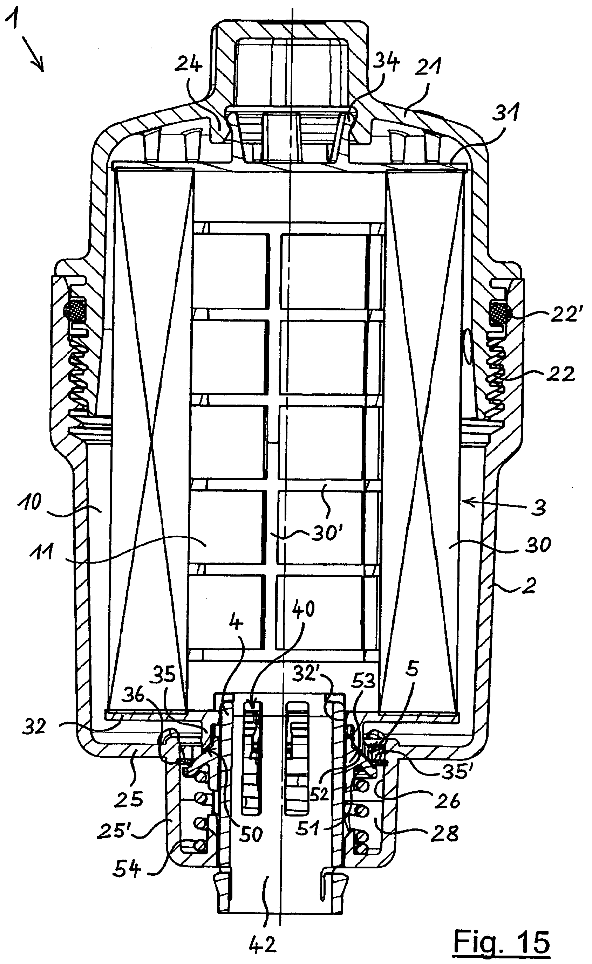

Figur 15 der Zeichnung zeigt ein weiteres Ausführungsbeispiel eines Flüssigkeitsfilters 1, hier ein stehender Flüssigkeitsfilter, ebenfalls mit einem Filterumgehungsventil 5. Der Flüssigkeitsfilter 1 besitzt auch hier ein becherförmiges Filtergehäuse 2, das oberseitig durch einen angeschraubten Deckel 21 verschlossen ist. Der Deckel 21 kann z.B. zum Zweck eines Filtereinsatzwechsels abgeschraubt werden.

Nach unten hin ist das Filtergehäuse 2 durch einen Boden 25 begrenzt, der einen hohlzylindrischen zentralen Bodenteil 25' aufweist. In dem Bodenteil 25' ist ein Standrohr 4 angeordnet, welches sich nach oben hin über den Boden 25 hinaus erstreckt und welches mit dem Bodenteil 25' einen Ringspalt 28 bildet.

Im Inneren des Filtergehäuses 2 ist ein Filtereinsatz 3 angeordnet, der wieder aus einem hohlzylindrischen Filterstoffkörper 30, einem darin angeordneten Stützgitter 30' und zwei Stirnscheiben 31 und 32 besteht. Die obere Stirnscheibe 31 ist hier geschlossen ausgeführt und besitzt an ihrer Oberseite einstückig angeformte Rastzungen 34, die rastend mit einem Rastring 24 an der Unterseite des Deckels 21 zusammenwirken.

Die untere Stirnscheibe 32 ist mit einer zentralen Durchbrechung 32' ausgebildet, die von einem sich axial nach unten und außen erstreckenden Kragen 35 umgeben ist. Mit der Durchbrechung 32' ist der Filtereinsatz 3 auf den oberen Teil des Standrohrs 4 aufgesteckt. An dem Kragen 35 ist ein Ventilsitz 50 ausgebildet, der auch hier wieder zwei parallel zueinander verlaufende, konzentrische, in Axialrichtung und Radialrichtung voneinander beabstandete runde Dichtkonturen 51 und 52 umfasst. Durch den Kragen 35 verläuft wieder mindestens ein Umgehungskanal 35', der im Bereich des Ventilsitzes 50 zwischen den Dichtkonturen 51 und 52 ausmündet.

Unterhalb der Stirnscheibe 32 und des damit einstückig ausgebildeten Kragens 35 ist auf dem Außenumfang des Standrohrs 4 ein ringförmiger Ventilkörper 53 axial verschieblich geführt. Mittels einer Schraubenfeder 54, die ebenso wie der Ventilkörper 53 in dem Ringspalt 28 angeordnet ist, ist der Ventilkörper 53 mit einer ihn in Schließrichtung vorbelasteten, hier nach oben weisenden Kraft vorbelastet. Der Ventilkörper 53 wird in normalen Betrieb des Filters 1 durch die Feder 54 dichtend gegen den Ventilsitz 50 mit den Dichtkonturen 51 und 52 gedrückt, so dass der Umgehungskanal 35' verschlossen ist.

Bei dem Beispiel nach Figur 15 hat der Ventilkörper 53 noch eine weitere Funktion, nämlich die eines Sperrelements einer Montagesperre gegen den Einbau von Fremd-Filtereinsätzen. Dazu weist das Standrohr 4 eine den Ventilkörper 53 gegen eine axiale Verschiebung sperrende Riegeleinrichtung 40 auf, die bei einem Einbauen eines Filtereinsatzes nur durch passende Entriegelungsmittel an einem zugehörigen Filtereinsatz 3 entriegelbar sind. Ein Fremd-Filtereinsatz, der die passenden Entriegelungsmittel nicht aufweist, lässt sich nicht in das Filtergehäuse 2 einbauen, weil sich der gleichzeitig das Sperrelement bildende Ventilkörper 53 aus einer obersten Lage nicht nach unten hin verschieben lässt. Damit hat der Ventilkörper 53 hier vorteilhaft eine doppelte Funktion.

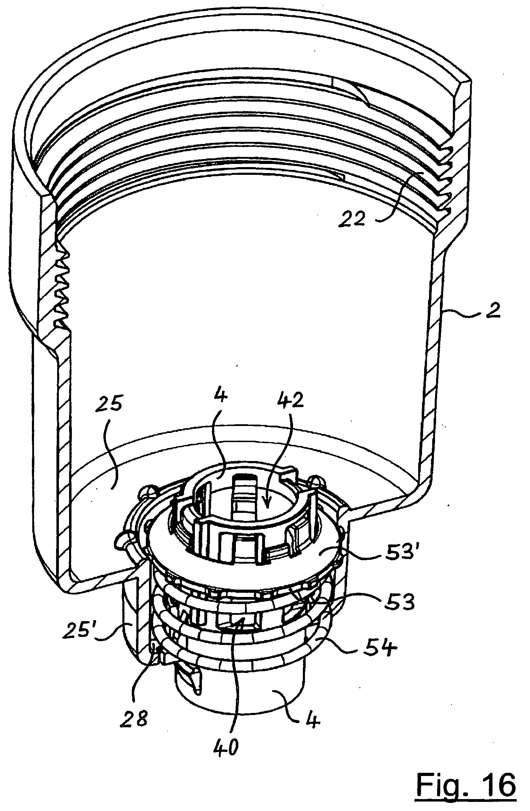

In Figur 16 ist das Filtergehäuse 2 aufgeschnitten dargestellt, zusammen mit dem Standrohr 4 und dem darauf geführten Ventilkörper 53 sowie der zugehörigen Feder 54, die in Ansicht gezeichnet sind. Das Standrohr 4 ist zentral in dem hohlzylindrischen Bodenteil 25' des Bodens 25 des Filtergehäuses 2 angeordnet und bildet mit dem Innenumfang des hohlzylindrischen Bodenteils 25' den Ringspalt 28. Im Ringspalt 28 sind der ringförmige Ventilkörper 53 mit seinem nach oben weisenden Dichtbereich 53' und darunter die Schraubenfeder 54 angeordnet und auf dem Standrohr 4 geführt. Durch das Innere des Standrohrs 4 verläuft ein Flüssigkeitsablaufkanal 42, durch den gefilterte Flüssigkeit aus dem Filtergehäuse 2 im Betrieb des Filters abfließt. An dem Standrohr 4 sind mit dem Ventilkörper 53 zusammenwirkende Elemente der Riegeleinrichtung 40 vorgesehen, die die vorstehend beschriebene Sperrfunktion des Ventilkörpers 53 gegen den Einbau eines Fremd-Filtereinsatzes bewirken.

Am Innenumfang des oberen Teils des Filtergehäuses 2 ist ein Innengewinde als Teil der Verschraubung 22 sichtbar.

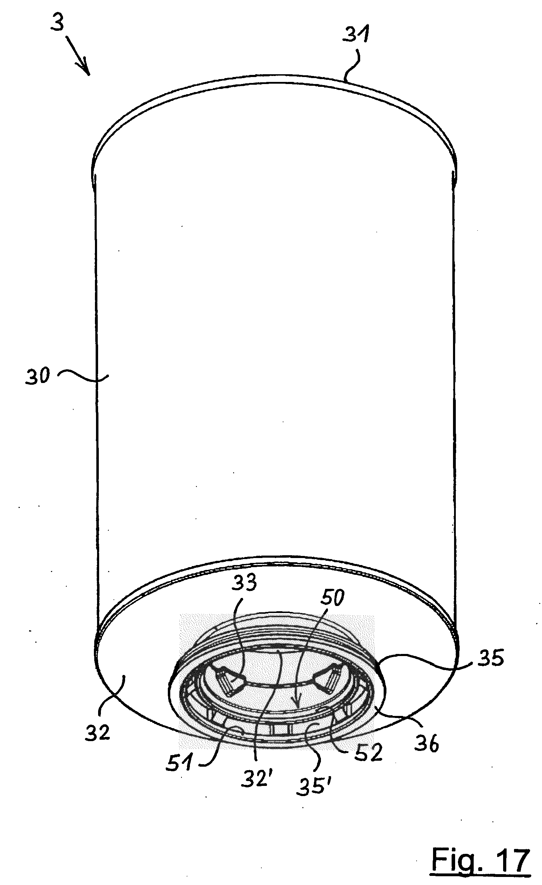

Figur 17 zeigt den Filtereinsatz 3 aus dem Flüssigkeitsfilter 1 gemäß Figur 15 als Einzelteil in Ansicht. Den größten Teil des Filtereinsatzes 3 bildet der Filterstoffkörper 30, der stirnseitig von der oberen Stirnscheibe 31 und der unteren Stirnscheibe 32 eingefasst ist. Die untere Stirnscheibe 32 besitzt die zentrale Durchbrechung 32' zum Aufstecken auf das Standrohr 4. Von der unteren Stirnscheibe 32 erstreckt sich einstückig mit dieser der Kragen 35 nach unten. Durch den Kragen 35 verlaufen mehrere Umgehungskanäle 35' in Radialrichtung von außen nach innen. Am Innenumfang des Kragens 35 ist der Ventilsitz 50 mit den beiden Dichtkonturen 51 und 52 ausgebildet, wobei die Umgehungskanäle 35' zwischen den beiden Dichtkonturen 51 und 52 ausmünden.

Axial oberhalb des Ventilsitzes 50 sind am Innenumfang des Kragens 35 oder der Durchbrechung 32' mehrere Entriegelungsmittel 33 in Form von dreieckigen Nasen angeordnet, die bei einem Aufstecken des Filtereinsatzes 3 auf das Standrohr 4 (vergleiche Figuren 15 und 16) die Riegeleinrichtung 40 entriegeln und so ein Verschieben des Ventilkörpers 53 auf dem Standrohr 4 nach unten hin freigeben.

Am unteren freien Rand des Kragens 35 ist schließlich noch die Dichtung 36 angeordnet, die im eingebauten Zustand des Filtereinsatzes 3 die Rohseite 10 von der Reinseite 11 des Filters 1 trennt.

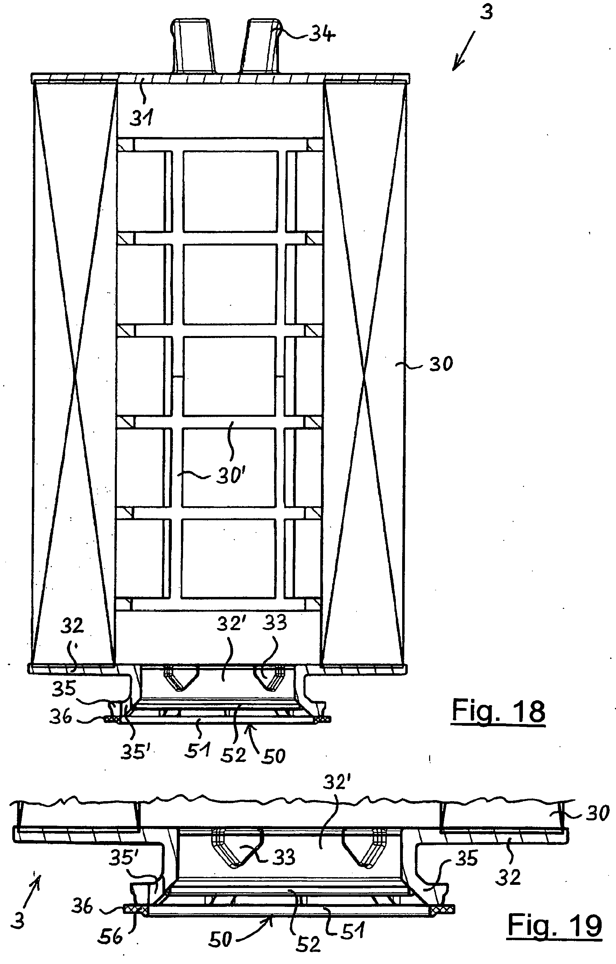

Figur 18 zeigt den Filtereinsatz 1 aus Figur 17 in einem Längsschnitt. Zwischen der oberen Stirnscheibe 31 und der unteren Stirnscheibe 32 sind der hohlzylindrische Filterstoffkörper 30 und darin das Stützgitter 30' angeordnet. Die obere Stirnscheibe 31 trägt oberseitig die Rastzungen 34.

Die untere Stirnscheibe 32 besitzt die zentrale Durchbrechung 32' und den sich nach unten und außen erstreckenden Kragen 35. Der Umgehungskanal 35' verläuft hier in Axialrichtung durch den Kragen 35. An der nach unten weisenden Seite des Kragens 35 ist der Ventilsitz 50 sichtbar, der durch die beiden auch hier axial und radial zueinander versetzten Dichtkonturen 51 und 52 gebildet ist. Auch hier mündet der mindestens eine Umgehungskanal 35' zwischen den beiden Dichtkonturen 51 und 52 aus. Radial außen von der äußeren Dichtkonturen 51 verläuft die Dichtung 36. Oberhalb des Dichtsitzes 50 sind am Innenumfang des Kragens 35 die radial nach innen in die Durchbrechung 32' vorragenden Entriegelungsmittel 33 in Form der je eine nach unten weisende Spitze aufweisenden Nasen sichtbar.

In Figur 19 ist die untere Stirnscheibe 32 des Filtereinsatzes 3 in einer vergrößerten Schnittdarstellung gezeigt. Hier wird besonders die Konstruktion des Kragens 35 deutlich. Oben am Innenumfang des Kragens 35 sind die nasenförmigen Entriegelungsmittel 33 angeformt. Axial nach unten schließen sich daran die innere Dichtkontur 52 und dann die äußere Dichtkontur 51 des Ventilsitzes 50 an. Durch den Kragen 35 verläuft der mindestens eine Umgehungskanal 35', der zwischen den beiden Dichtkonturen 51 und 52 ausmündet. An die untere, äußere Dichtkontur 51 schließt sich der sich radial nach außen erstreckende Dichtring 36 an, der hier mit der Dichtkontur 51 zu einem Dichtring 56 zusammengefasst ist.

Oberhalb der Stirnscheibe 32 ist noch ein kleiner Teil des Filterstoffkörpers 30 sichtbar.

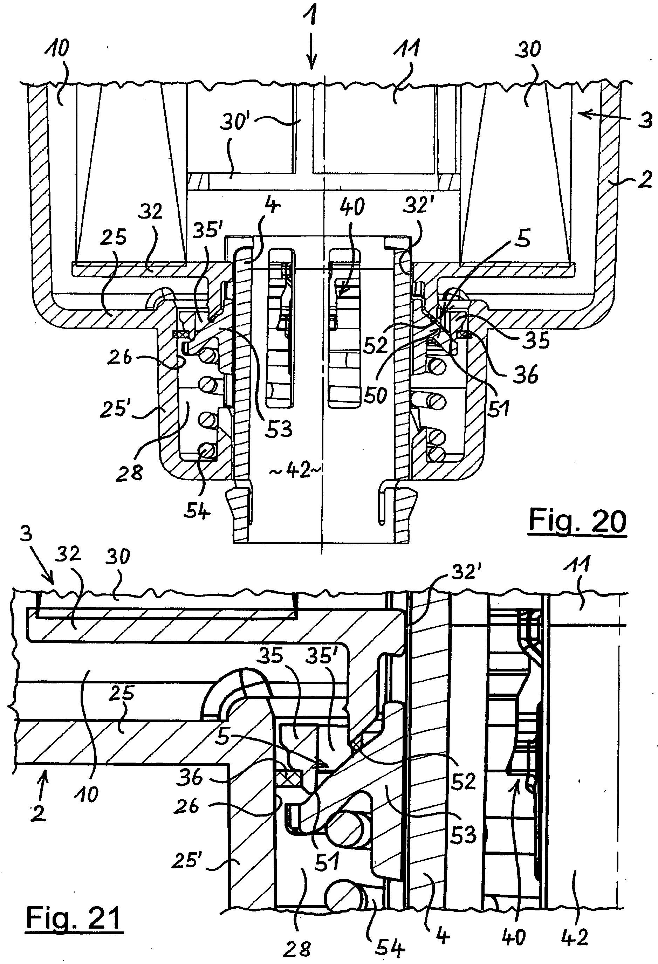

In den Figuren 20 und 21 ist ein Beispiel eines Flüssigkeitsfilters 1 dargestellt, das sich hinsichtlich der Gestaltung der Dichtkonturen 51 und 52 des Ventilsitzes 50 und hinsichtlich der Gestaltung der Dichtung 36 von dem zuvor beschriebenen Beispiel unterscheidet. In seinen anderen Einzelteilen entspricht das Beispiel nach den Figuren 20 und 21 dem zuvor beschriebenen Ausführungsbeispiel.

Für das Beispiel nach Figur 20 und 21 ist charakteristisch, dass die beiden Dichtkonturen 51 und 52 mit unterschiedlicher Härte ausgeführt sind. Die Dichtkontur 51 ist eine harte Dichtkontur, die materialeinheitlich mit dem Kragen 35 und der Stirnscheibe 32 ausgeführt ist. Die Dichtkontur 52 dagegen ist durch einen an dem Kragen 35 angebrachten, vorzugsweise angespritzten, Elastomerring gebildet, der gegenüber dem Material des Kragens 35 und auch des Ventilkörpers 53 weicher und nachgiebiger ist. Hiermit wird gewährleistet, dass in Schließstellung des Ventilkörpers 53 des Filterumgehungsventils 5 zu beiden Dichtkonturen 51 und 52 eine zuverlässig dichtende Anlage erzielt wird.

Die Dichtung 36, die die Rohseite 10 von der Reinseite 11 des Flüssigkeitsfilters 1 trennt, ist hier als separater Dichtring an dem Kragen 35 angebracht, beispielsweise ebenfalls angespritzt oder alternativ angeklebt oder angeschweißt. Im eingebauten Zustand des Filtereinsatzes 3 dichtet der Dichtring 36 gegen die Dichtfläche 26 am Innenumfang des hohlzylindrischen Bodenteils 25' als Radialdichtung ab.

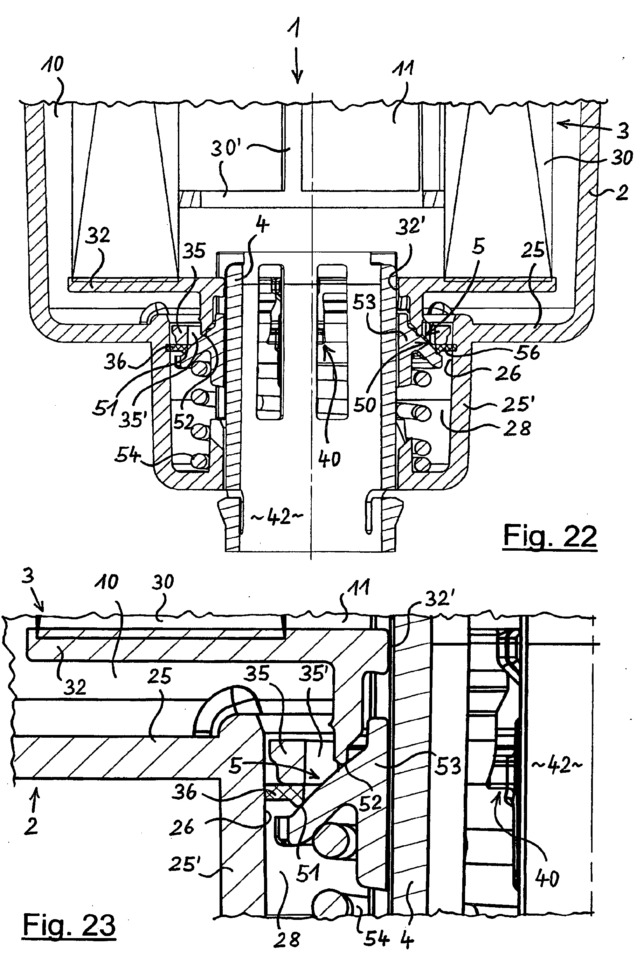

Die Figuren 22 und 23 zeigen jeweils in Längsschnitt ein weiteres Beispiel des Flüssigkeitsfilters 1, bei dem wieder eine geänderte Ausführung der Dichtkonturen 51 und 52 und der Dichtung 36 vorliegt.

Auch bei diesem Beispiel sind die Dichtkonturen 51 und 52 mit unterschiedlicher Härte ausgeführt, allerdings ist hier die Dichtkontur 51 eine weiche Dichtkontur, während die Dichtkontur 52 hier eine harte, mit dem Material des Kragens 35 einheitliche Dichtkontur ist.

Die Dichtkontur 51 besteht hier aus einem weicheren und dadurch nachgiebigen Elastomerring, der an dem Kragen 35 unterseitig angebracht ist, wie angespritzt oder angeklebt oder angeschweißt. Der die Dichtkontur 51 bildende Elastomerring ist hier zugleich auch die Dichtung 36 zur Trennung von Rohseite 10 und Reinseite 11, so dass hier die Dichtkontur 51 und die Dichtung 36 einen einheitlichen, einstückigen Dichtring 56 bilden.

Hinsichtlich der weiteren Teile und Bezugsziffern in den Figuren 22 und 23 wird auf die vorhergehende Beschreibung verwiesen.

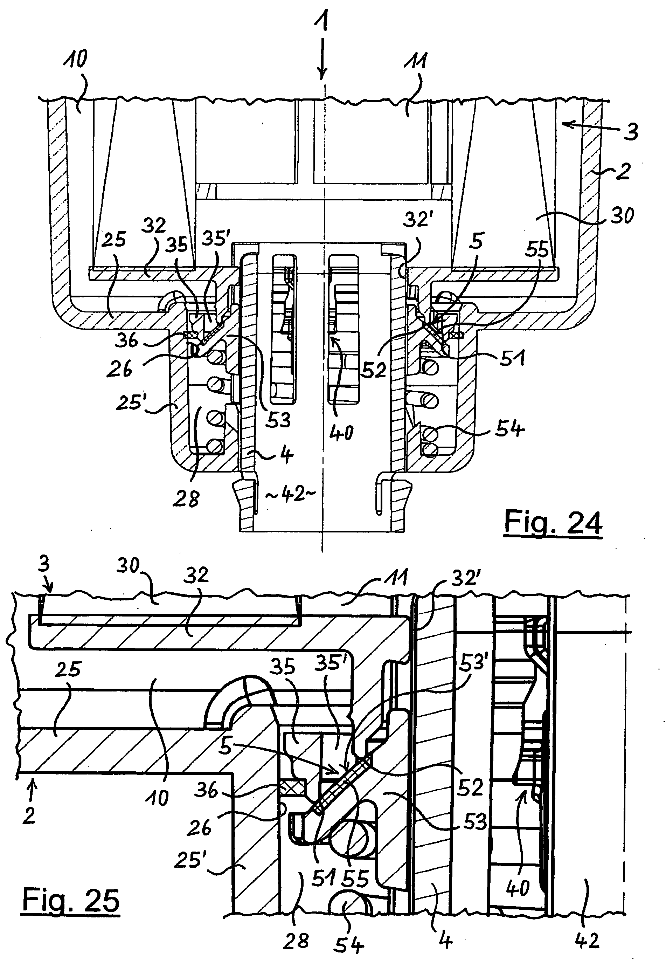

Die Figuren 24 und 25 zeigen ein Beispiel des Flüssigkeitsfilters 1 mit einer nochmals geänderten Ausführung der Dichtkonturen 51 und 52 des Ventilsitzes 50. Charakteristisch ist hier, dass beide Dichtkonturen 51 und 52 am Kragen 35 mit diesem materialeinheitlich, also als harte Dichtkonturen ausgeführt sind. Um dennoch eine gute Dichtigkeit des Filterumgehungsventils 5 in seiner Schließstellung zu gewährleisten, ist der Ventilkörper 53, genauer dessen Dichtbereich 53', mit einer Elastomerauflage 55 versehen, wodurch der Dichtbereich 53' insgesamt weich und nachgiebig wird. Somit wird auch hier gewährleistet, dass die beiden Dichtkonturen 51 und 52 in Schließstellung des Ventilkörpers 53 mit diesem zuverlässig dichtend zusammenwirken.

Die Dichtung 36 zur Trennung von Rohseite 10 und Reinseite 11 ist hier als separater Dichtring an dem Kragen 35 radial außen angebracht. Die Dichtung 36 wirkt auch hier als Radialdichtung dichtend mit der am Innenumfang des hohlzylindrischen Bodenteils 25' gebildeten Dichtfläche 26 zusammen.

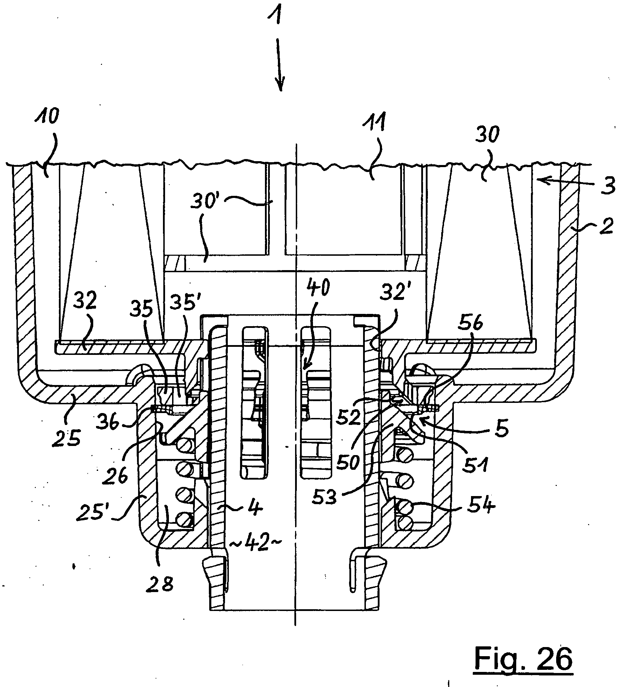

Figur 26 zeigt den Flüssigkeitsfilter 1 der vorstehend beschriebenen Art im Längsschnitt, nun mit geöffnetem Filterumgehungsventil 5. Durch eine zwischen der Rohseite 10 und der Reinseite 11 des Filters 1 herrschende, über einen vorgebbaren Grenzwert erhöhte Flüssigkeitsdruckdifferenz wirkt auf den Ventilkörper 53 eine Kraft, die die Vorbelastungskraft der Feder 54 übersteigt. Hierdurch wird der Ventilkörper 53 gegen die Kraft der Feder 54 nach unten, also vom Ventilsitz 50 weg, bewegt und der Umgehungskanal 35' in dem Kragen 35 wird geöffnet. Somit kann Flüssigkeit von der Rohseite 10 des Filters 1 unter Umgehung des Filterstoffkörpers 30 unmittelbar zur Reinseite 11 strömen. Sobald die Kraft der Feder 54 die von der Flüssigkeit auf den Ventilkörper 53 ausgeübte Kraft wieder übersteigt, geht der Ventilkörper 53 in seine Schließstellung zurück und sperrt den Umgehungskanal 35'.

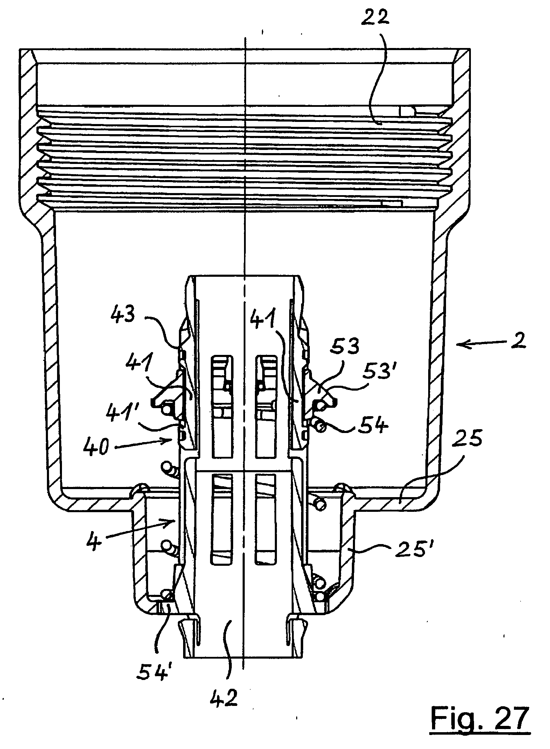

Die Figur 27 zeigt im Längsschnitt ein Filtergehäuse 2 mit einem zugleich ein Sperrelement einer Montagesperre bildenden Ventilkörper 53 des Filterumgehungsventils, wobei hier weder ein Filtereinsatz eingebaut noch ein Gehäusedeckel angeschraubt ist. Mit dem Boden 25 des Filtergehäuses 2 ist hier ein zentrales Standrohr 4 dicht verbunden, welches somit einen Teil des Filtergehäuses 2 bildet. Auf dem Außenumfang des Standrohrs 4 ist der Ventilkörper 53 des Filterumgehungsventils axial verschiebbar geführt. Durch die Kraft der Feder 54 ist hier der Ventilkörper 53 auf dem Standrohr 4 in seine oberste Position verschoben.

Das Standrohr 4 weist eine Riegeleinrichtung 40 auf, die mit dem das Sperrelement der Montagesperre gegen den Einbau von Fremd-Filtereinsätzen bildenden Ventilkörper 53 zusammenwirkt. Die Riegeleinrichtung erlaubt ein axiales Verschieben des Ventilkörpers 53 auf dem Standrohr 4 nach unten nur, wenn ein zugehöriger Filtereinsatz 3 mit passenden Entriegelungsmitteln eingebaut wird.

Hierzu sind in der oberen Hälfte des Standrohrs 4 symmetrisch einander gegenüberliegend zwei federnde Riegelarme 41 angeordnet, vorzugsweise einstückig angeformt, die in Axialrichtung von oben nach unten verlaufen. Jeweils auf Ihrer radial nach außen weisenden Seite tragen die Riegelarme 41 an ihrem freien, unteren Ende einen radial nach außen weisenden Riegelhaken 41'. Wie die Figur 27 veranschaulicht, bilden die Riegelhaken 41' eine Sperre, die ein Verschieben des Ventilkörpers 53 nach unten verhindert, wenn sich, wie in Figur 27, die Riegelarme 41 in ihrer Riegelstellung befinden.

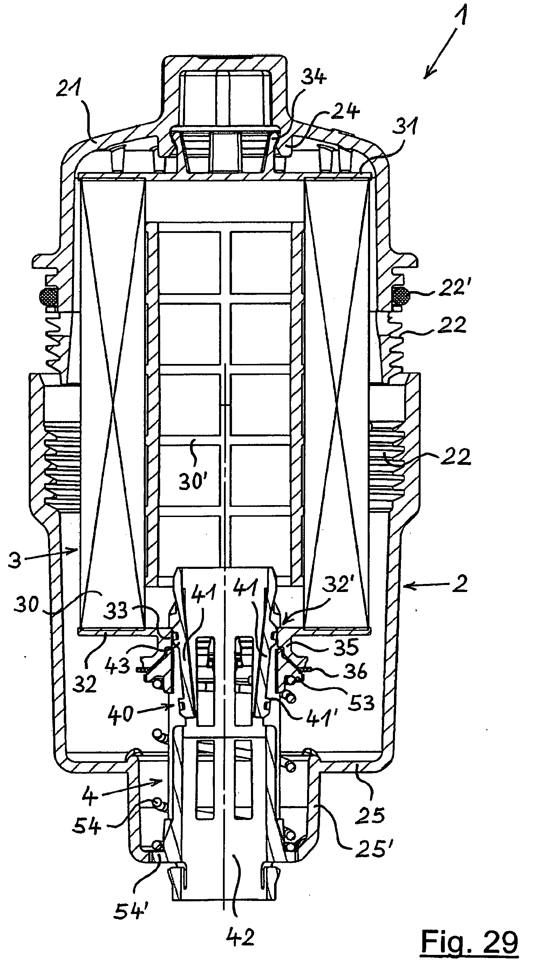

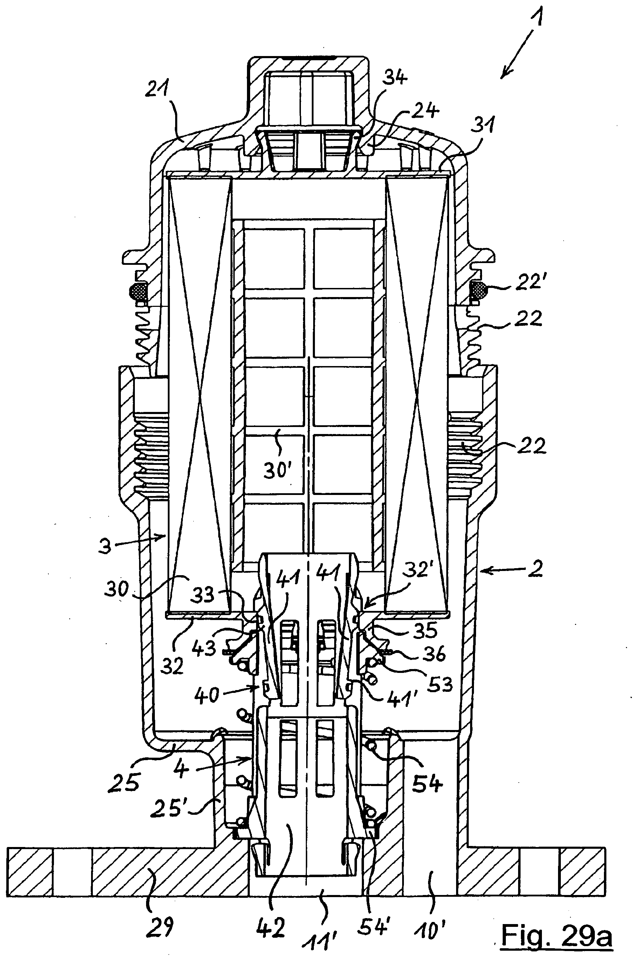

In einem axialen Abstand über dem Riegelhaken 41' ist an jedem Riegelarm 41 ebenfalls an dessen radial nach außen weisender Seite je ein Entriegelungsnocken 43 angeordnet. Wenn ein Filtereinsatz 3 mit passenden Entriegelungsmitteln in das Filtergehäuse 2 nach Figur 27 eingebaut wird, wird die Riegeleinrichtung 40 mittels der auf die Entriegelungnocken 43 wirkenden Entriegelungsmittel entriegelt, so dass dann der Filtereinsatz 3 unter Verschiebung des Ventilkörpers 53 gegen die Kraft der Feder 54 nach unten auf das Standrohr 4 aufgeschoben werden kann, wie später anhand der Figur 29 noch erläutert wird.

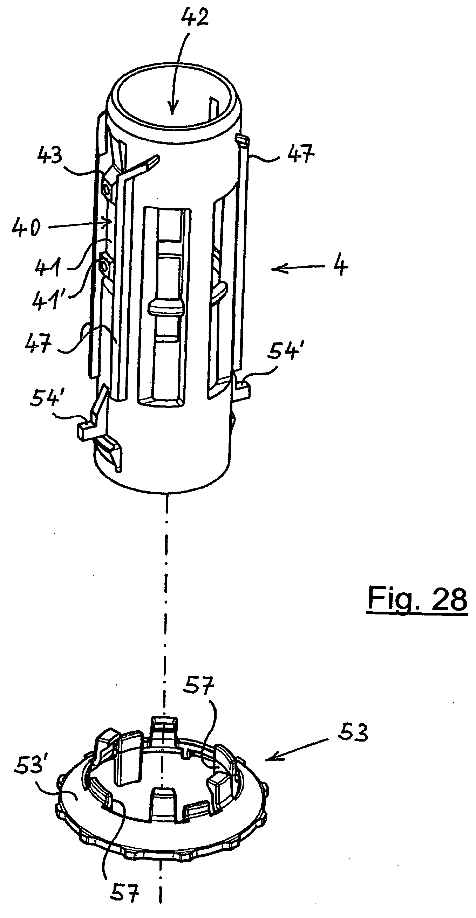

Die Figur 28 zeigt das Standrohr 4 mit der Riegeleinrichtung 40 und den Ventilkörper 53 aus Figur 27 als Einzelteile in Ansicht. Das Standrohr 4 besitzt auf seinem Umfang einander symmetrisch gegenüberliegend die beiden Riegelarme 41, von denen hier nur einer sichtbar ist. An seinem unteren Ende trägt der Riegelarm 41 den radial nach außen weisenden Riegelhaken 41'. In einem axialen Abstand darüber ist ebenfalls auf der Außenseite des Riegelarms 41 der Entriegelungsnocken 43 angeordnet. In Umfangsrichtung gesehen beiderseits jedes Riegelarms 41 verlaufen zwei axiale Stege, die miteinander eine axiale Führung 47 bilden, deren oberer Abschnitt trichterförmig verläuft. Mittels dieser Führung 47 werden die Entriegelungsmittel an einem zugehörigen Filtereinsatz 3 bei dessen Einbauen in eine eingriffsgerechte Position relativ zu den Riegelarmen 41 und ihren Entriegelungsnocken 43 gebracht.

Jeweils axial unterhalb der Führungen 47 ist je eine Federstütze 54' für die den Ventilkörper 53 in Schließrichtung, hier in Richtung nach oben, vorbelastende, hier nicht dargestellte Feder 54 angeordnet. Das hohle Innere des Standrohrs 4 bildet den Flüssigkeitsablaufkanal 42.

Der Ventilkörper 53 ist, wie schon früher dargestellt und beschrieben, ringförmig ausgeführt und besitzt an seiner in Figur 28 nach oben weisenden Seite den konischen Dichtbereich 53'. An seinem Innenumfang besitzt der Ventilkörper 53 zwei Führungsvorsprünge 57, die mit den Führungen 47 zusammenwirken. Beim Zusammenbau des Filters 1 wird auf das Standrohr 4 zunächst von oben her die zugehörige Feder 54 (vergleiche z.B. Figur 27) aufgesetzt und anschließend der Ventilkörper 53 ebenfalls von oben her auf das Standrohr 4 aufgesteckt und so weit nach unten verschoben, bis die Führungsvorsprünge 57 des Ventilkörpers 53 über die Riegelhaken 41' hinwegbewegt sind. Danach sperren die Entriegelungsnocken 43 eine Bewegung des Ventilkörpers 53 zurück nach oben und sperren die Riegelhaken 41' eine Bewegung des Ventilkörpers 53 weiter nach unten. Das Standrohr 4, die Feder 54 und der Ventilkörper 53 bilden somit eine vormontierte Baueinheit, die einfach in das übrige Filtergehäuse 2 eingebaut werden kann.

Sowohl das Standrohr 4 als auch der darauf geführte Ventilkörper 53 sind vorzugsweise Spritzgussteile aus Kunststoff, um sie kostengünstig in großer Stückzahl herstellen zu können. Außerdem können so die Riegelarme 41 problemlos einstückig mit dem übrigen Standrohr 4 unter Erzielung der gewünschten federnden Eigenschaften gefertigt werden.

Figur 29 zeigt, wieder im Längsschnitt, das Filtergehäuse 2 aus Figur 27 beim Einbauen eines mit einem Gehäusedeckel 21 verrasteten, zugehörigen Filtereinsatzes 3. Zum lösbaren rastenden Verbinden des Filtereinsatzes 3 mit dem Deckel 21 dienen ein Rastring 24 an der Innenseite des Deckels 21 und ein Kranz von Rastzungen 34 an der Oberseite der oberen Stirnscheibe 31 des Filtereinsatzes 3.

Mit seiner unteren Stirnscheibe 32 voran ist der Filtereinsatz 3 mit der zentralen Durchbrechung 32' auf das Standrohr 4 aufgesteckt und nach unten bewegt, wobei dann zum einen am Innenumfang der Durchbrechung 32' angeordnete nasenförmige Entriegelungsmittel 33 in Eingriff mit den Entriegelungsnocken 43 treten und zum anderen der unterseitig an der unteren Stirnscheibe 32 angeformte Kragen 35 in Anlage an den Ventilkörper 53 gelangt. Durch den Kragen 35 verläuft der vorhergehend schon ausführlich beschriebene, in der Schnittebene der Figur 29 nicht sichtbare Umgehungskanal 35' und an dem Kragen 35 sind auch die ebenfalls schon beschriebenen Dichtkonturen 51 und 52 ausgebildet, zwischen denen der Umgehungskanal 35' ausmündet.

Bei weiterem Verschieben des Filtereinsatzes 3 auf dem Standrohr 4 nach unten verschwenken die Entriegelungsmittel 33 die Riegelarme 41 der Riegeleinrichtung 40 in Radialrichtung nach innen, wodurch die Riegelhaken 41' außer Eingriff mit dem Ventilkörper 53 gelangen und eine Verschiebung des Ventilkörpers 53 und des Filtereinsatzes 3 auf dem Standrohr 4 weiter nach unten freigegeben. Der Filtereinsatz 3 kann somit also vollständig in das Filtergehäuse 2 eingeführt werden.

Das Filtergehäuse 2 ist hier in seinem unteren Teil zu einer Verbindung durch Stecken, z.B. mit einem Ölmodul einer Brennkraftmaschine, ausgestaltet.

Die Figur 29a zeigt im Längsschnitt den Flüssigkeitsfilter 1 mit einem in seinem unteren Teil gegenüber Figur 29 geänderten Filtergehäuse 2, ebenfalls beim Einbauen eines zugehörigen, passenden Filtereinsatzes 3. Die Änderung des Filtergehäuses 2 besteht hier darin, dass dessen unterster Teil als oder mit einem Flansch 29 ausgeführt ist, mittels welchem der Flüssigkeitsfilter 1 mit einem passenden Gegenflansch, z.B. einer zugehörigen, hier nicht dargestellten Brennkraftmaschine, verbindbar ist. Zusätzlich zu der mechanischen Verbindung werden hier über den Flansch 29 ein zu filternde Flüssigkeit zur Rohseite 10 des Filters 1 führender Einlass 10' und ein gefilterte Flüssigkeit von der Reinseite 11 des Filters 1 wegführender Auslass 11' strömungsmäßig mit zugehörigen, entsprechenden Kanälen im Gegenflansch strömungsmäßig verbunden.

In seinen übrigen Teilen und Eigenschaften entspricht der Flüssigkeitsfilter 1 nach Figur 29a dem Beispiel gemäß Figur 29, auf deren Beschreibung verwiesen wird.

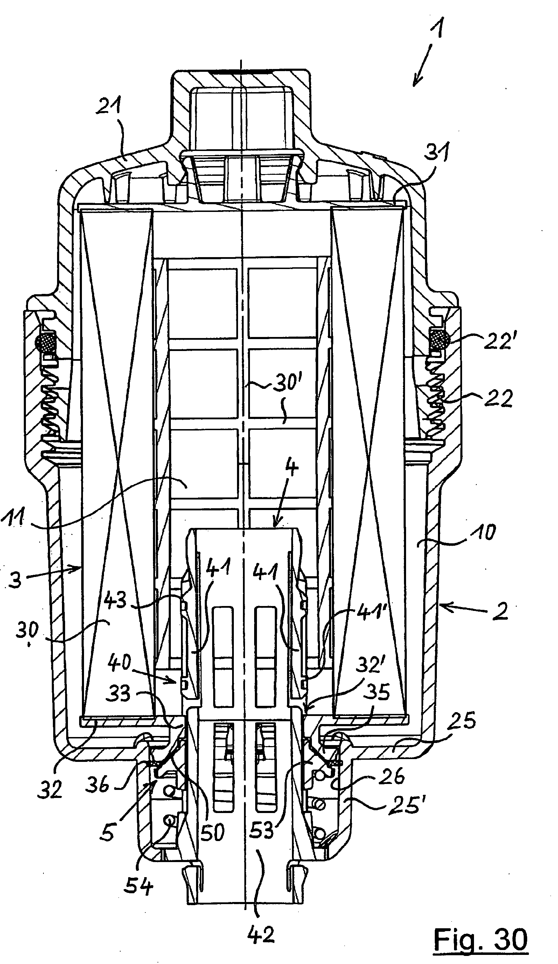

Figur 30 zeigt den aus dem Filtergehäuse 2, dem Gehäusedeckel 21 und dem Filtereinsatz 3 aus Figur 29 zusammengebauten, kompletten Flüssigkeitsfilter 1, wieder im Längsschnitt. Der Filtereinsatz 3 mit seiner unteren Stirnscheibe 32 und ihrem Kragen 35 ist nun über die Riegeleinrichtung 40 des Standrohrs 4 nach unten in seine Endposition verschoben. Die Riegelarme 41 sind aufgrund der ihnen eigenen Federeigenschaft wieder nach außen in ihre Grundstellung ausgefedert, die die Riegelstellung darstellt. Gleichzeitig ist nun der Deckel 21 unter Zwischenlage der Dichtung 22' vollständig und dicht mit dem Filtergehäuse 2 verschraubt. Der Flüssigkeitsfilter 1 ist jetzt einsatzbereit.

Falls der Druckabfall der zu filternden Flüssigkeit über den Filterstoffkörper 30 einen vorgebbaren Grenzwert überschreitet, bewirkt die Druckdifferenz eine Bewegung des Ventilkörpers 53 in Axialrichtung nach unten, wodurch der durch den Kragen 35 verlaufende Umgehungskanal 35', der auch in der Schnittebene der Figur 30 nicht sichtbar ist, geöffnet wird, wie weiter oben schon erläutert.

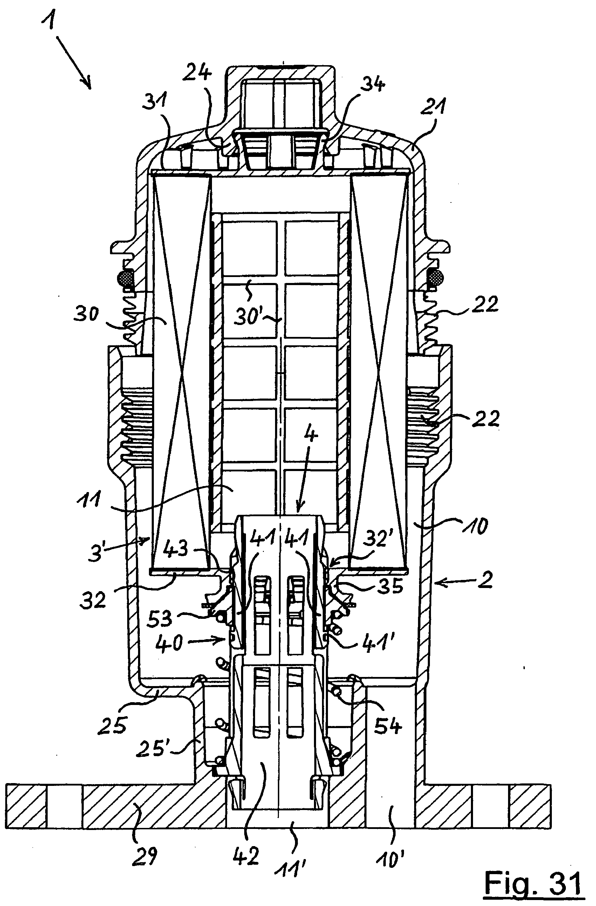

Figur 31 zeigt im Längsschnitt das Filtergehäuse 2 aus Figur 27 beim Versuch des Einbauens eines nicht passenden Fremd-Filtereinsatzes 3'. Für den Fremd-Filtereinsatz 3' ist charakteristisch, dass er die nötigen Entriegelungsmittel zum Entriegeln der Riegeleinrichtung 40 nicht besitzt. Dies führt dazu, dass, wie in Figur 31 veranschaulicht, beim Aufstecken des Fremd-Filtereinsatzes 3' auf das Standrohr 4 die Riegeleinrichtung 40 nicht entriegelt wird, weil deren Riegelarme 41 mit den Riegelhaken 41' nicht in Radialrichtung nach innen verschwenkt werden. Daher behalten die Riegelhaken 41' ihre Riegelstellung bei, in der sie ein Verschieben des Ventilkörpers 53 in Axialrichtung nach unten auf dem Standrohr 4 sperren. Ein weiteres Aufschieben des Fremd-Filtereinsatzes 3' auf das Standrohr 4 ist somit nicht möglich und der Deckel 21 kann mangels Eingriffs der Verschraubung 22 nicht mit dem Filtergehäuse 2 verbunden werden. Ein Betrieb des Flüssigkeitsfilters 1 mit einem Fremd-Filtereinsatz 3' ohne die passenden Entriegelungsmittel wird also verhindert.

Weiterhin veranschaulicht die Figur 31, unabhängig von der Ausführung des Ventilkörpers 53 als Sperrelement, dass der Flüssigkeitsfilter 1 einen Flansch 29, z.B. an seiner Unterseite, aufweisen kann, um den Filter 1 mit z. B. einer zugehörigen Brennkraftmaschine schnell und einfach zu verbinden. Durch den Flansch 29 verlaufen dabei ein Einlass 10' und ein Auslass 11', um die nötigen Strömungsverbindungen herzustellen. Durch den Einlass 10' gelangt zu filternde Flüssigkeit, beispielsweise Schmieröl einer zugehörigen Brennkraftmaschine, auf die Rohseite 10 des Filters 1. Von dort strömt die zu filternde Flüssigkeit durch den Filterstoffkörper 30 des Filtereinsatzes 3, wobei in der Flüssigkeit enthaltene Schmutzpartikel zurückgehalten werden. Die gefilterte Flüssigkeit fließt dann von der Reinseite 11 des Filters 1 durch den durch das Standrohr 4 verlaufenden zentralen Flüssigkeitsablaufkanal 42 in den Auslass 11' im Flansch 29 und durch diesen zur zugehörigen Brennkraftmaschine zurück, insbesondere in deren Ölwanne. Der Flansch 29 kann mittels nicht dargestellter Schraubbolzen unter Zwischenlage einer Dichtung an einem passenden Gegenflansch einer Brennkraftmaschine montiert werden.

Alternativ kann der Flüssigkeitsfilter 1 auch über externe Leitungen mit einer Brennkraftmaschine strömungsmäßig verbunden werden oder er kann auch Teil eines Moduls sein, das weitere Komponenten umfasst und das als Baueinheit vormontierbar und dann mit z. B. einer Brennkraftmaschine verbindbar ist. Zur Integration des Flüssigkeitsfilters in ein Modul kann z.B. das Filtergehäuse 2 des Flüssigkeitsfilters 1 an das Gehäuse des Moduls angegossen sein.

Bei den zuvor beschriebenen Ausführungsbeispielen ist der Kragen 35, in dem der Ventilsitz 50 und der mindestens eine Umgehungskanal 35' ausgebildet sind, einstückig mit der oberen Stirnscheibe 31 oder mit der unteren Stirnscheibe 32 des Filtereinsatzes 3 ausgeführt.

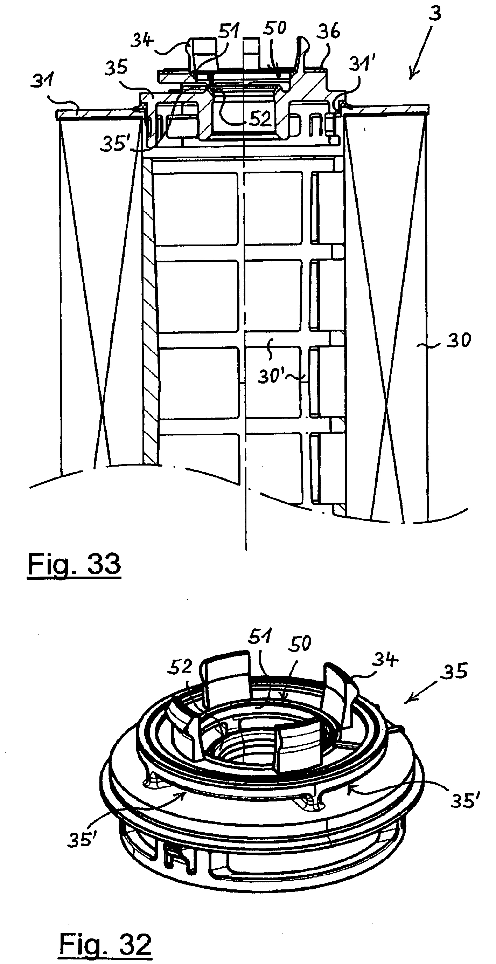

Alternativ kann der Kragen 35 auch ein separates Einzelteil sein, wie in den Figuren 32 und 33 dargestellt.

Figur 32 zeigt zunächst in einer perspektivischen Ansicht den Kragen 35, der den Ventilsitz 50 mit den beiden konzentrischen, in Radialrichtung und Axialrichtung voneinander beabstandeten Dichtkonturen 51 und 52 an seiner Oberseite aufweist. In Radialrichtung von außen nach innen verlaufen durch den Kragen 35 mehrere, hier vier Umgehungskanäle 35', die radial innen zwischen den Dichtkonturen 51 und 52 ausmünden. An seiner Unterseite besitzt der Kragen 35 ein ringförmiges Rastelement, mit dem der Kragen 35 mit einem zugehörigen Filtereinsatz 3 verbindbar ist.

Figur 33 zeigt einen Filtereinsatz 3 mit dem damit verbundenen Kragen 35 aus Figur 32 im Längsschnitt. Der Filtereinsatz 3 besteht wieder aus einem hohlzylindrischen Filterstoffkörper 30 und einen darin angeordneten Stützgitter 30' sowie zwei Stirnscheiben, von denen hier nur die obere Stirnscheibe 31 sichtbar ist. Die Stirnscheibe 31 besitzt eine zentrale Durchbrechung 31', in welche von oben her der Kragen 35 aus Figur 32 rastend sowie über einen Dichtring abgedichtet eingesteckt ist.

Im Inneren des Kragens 35 ist einer der in Radialrichtung von außen nach innen verlaufenden Umgehungskanäle 35' sichtbar, der radial innen zwischen den beiden Dichtkonturen 51 und 52 des Ventilsitzes 50 ausmündet. Oberseitig trägt der Kragen 35 die Rastzungen 34, die zum Verrasten des Filtereinsatzes 3 mit dem hier nicht dargestellten Deckel des Filtergehäuses dienen. Außerdem trägt der Kragen 35 auf seiner nach oben weisenden Seite die Dichtung 36, welche im eingebauten Zustand des Filtereinsatzes 3 eine Rohseite 10 und eine Reinseite 11 des Flüssigkeitsfilters 1 voneinander trennt.

Wenn der Kragen 35 an den Filtereinsatz 3 angebaut ist, hat der Filtereinsatz 3 die gleichen Eigenschaften wie beispielsweise der Filtereinsatz gemäß Figur 5.

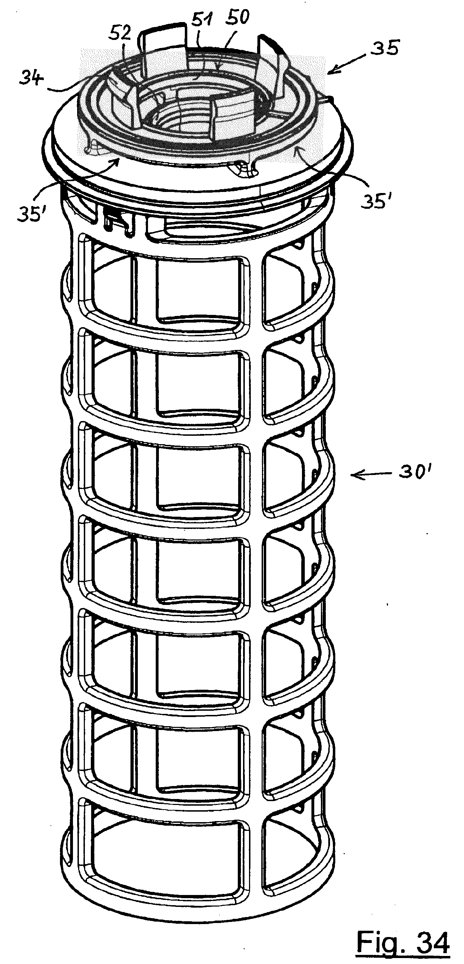

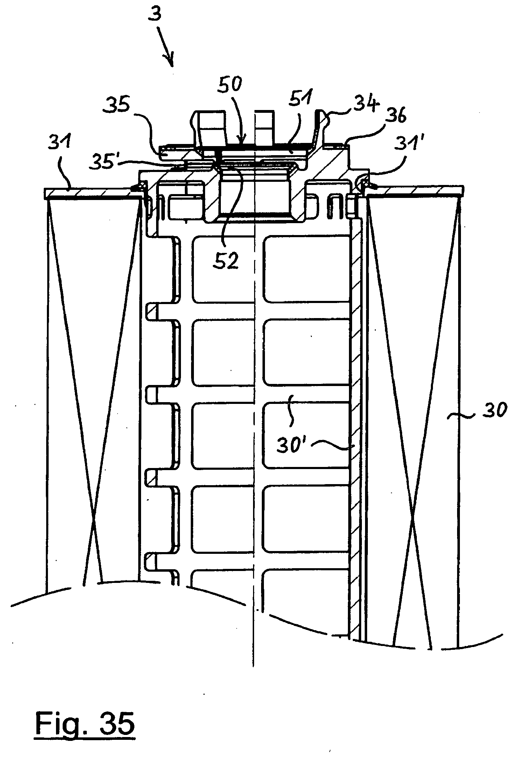

Eine Alternative, bei der der Kragen 35 mit dem Stützgitter 30' zu einem einstückigen Bauteil zusammengefasst ist, ist in den Figuren 34 und 35 dargestellt.

Die Figur 34 zeigt zunächst in perspektivischer Ansicht die Baueinheit aus dem Stützgitter 30' und dem Kragen 35. In seiner geometrischen Gestaltungen entspricht der Kragen 35 in Figur 34 dem Kragen gemäß Figur 32, auf deren Beschreibung verwiesen wird.

In Figur 35 ist ein Filtereinsatz 3 dargestellt, der mit der Baueinheit aus Stützgitter 30' und Kragen 35 versehen ist. Auch hier ist die Baueinheit aus Stützgitter 30' und Kragen 35 von oben her durch die zentrale Durchbrechung 31' der oberen Stirnscheibe 31 in das Innere des Filterstoffkörpers 30 eingesteckt, wobei der Kragen 35 axial oberhalb der Stirnscheibe 31 zu liegen kommt. Über geeignete Rastmittel und eine umlaufende Dichtung ist der Kragen 35 mechanisch mit der oberen Stirnscheibe 31 verbunden und gegen diese abgedichtet.

Im linken Teil des Kragens 35 ist einer der in Radialrichtung von außen nach innen verlaufenden Umgehungskanäle 35' erkennbar. Oberseitig am Kragen 35 liegt der Ventilsitz 50 mit den beiden konzentrischen Dichtkonturen 51 und 52, zwischen denen die Umgehungskanäle 35' ausmünden. An der nach oben weisenden Seite des Kragens 35 sind schließlich auch noch die Rastzungen 34 sowie die Dichtung 36 angeordnet.

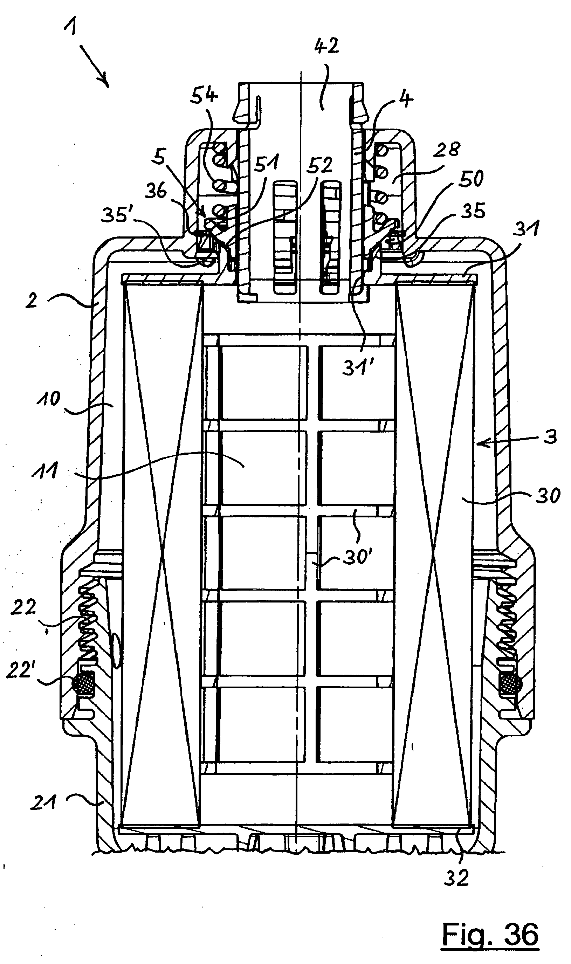

Die Figur 36 zeigt den Flüssigkeitsfilter 1 mit Filterumgehungsventil 5 in einer weiteren, letzten Ausführung, im Längsschnitt. Der Flüssigkeitsfilter 1 ist hier ein hängender Filter 1 und besitzt ein umgekehrt becherförmiges Filtergehäuse 2, das unterseitig durch einen angeschraubten Deckel 21 verschlossen ist. Der Deckel 21 kann z.B. zum Zweck eines Filtereinsatzwechsels abgeschraubt werden. Um vor dem Abschrauben des Deckels 21 das Filtergehäuse 2 von Flüssigkeit entleeren zu können, kann der Deckel 21 eine in Figur 36 nicht sichtbare Ablassschraube aufweisen, wie sie beispielsweise in Figur 9 gezeigt ist, dann allerdings ohne Filterumgehungsventil 5 in der Ablassschraube, da dieses hier oben im Filtergehäuse 2 angeordnet ist.

Nach oben hin ist das Filtergehäuse 2 durch einen im Durchmesser einspringenden, hohlzylindrischen zentralen Gehäuseteil begrenzt, in dem ein Standrohr 4 angeordnet, welches mit dem hohlzylindrischen zentralen Gehäuseteil einen Ringspalt 28 bildet und sich nach unten hin etwas aus dem Ringspalt 28 hinaus erstreckt. Durch das Innere des Standrohrs 4 verläuft der Flüssigkeitsablaufkanal 42.

Im Inneren des Filtergehäuses 2 ist ein Filtereinsatz 3 angeordnet, der wieder aus einem hohlzylindrischen Filterstoffkörper 30, einem darin angeordneten Stützgitter 30' und zwei Stirnscheiben 31 und 32 besteht. Die untere Stirnscheibe 32 ist hier geschlossen ausgeführt. An ihrer Unterseite kann die Stirnscheibe 32 einstückig angeformte Rastzungen aufweisen, die rastend mit einem Rastring an der Oberseite des Deckels 21 zusammenwirken, wie weiter oben schon an anderen Ausführungsbeispielen beschrieben.

Die obere Stirnscheibe 31 ist mit einer zentralen Durchbrechung 31' ausgebildet, die von einem sich axial nach oben und außen erstreckenden Kragen 35 umgeben ist. Mit der Durchbrechung 31' ist der Filtereinsatz 3 von unten her auf den unteren Teil des Standrohrs 4 aufgesteckt. An dem Kragen 35 ist ein Ventilsitz 50 ausgebildet, der auch hier wieder zwei parallel zueinander verlaufende, konzentrische, in Axialrichtung und Radialrichtung voneinander beabstandete runde Dichtkonturen 51 und 52 umfasst. Durch den Kragen 35 verläuft wieder mindestens ein Umgehungskanal 35', der im Bereich des Ventilsitzes 50 zwischen den Dichtkonturen 51 und 52 ausmündet.

Oberhalb der Stirnscheibe 31 und des damit einstückig ausgebildeten Kragens 35 ist auf dem Außenumfang des Standrohrs 4 ein ringförmiger Ventilkörper 53 axial verschieblich geführt. Mittels einer Schraubenfeder 54, die ebenso wie der Ventilkörper 53 in dem Ringspalt 28 angeordnet ist, ist der Ventilkörper 53 mit einer ihn in Schließrichtung vorbelasteten, hier nach unten weisenden Kraft beaufschlagt. Der Ventilkörper 53 wird in normalen Betrieb des Filters 1 durch die Feder 54 dichtend gegen den Ventilsitz 50 mit den Dichtkonturen 51 und 52 gedrückt, so dass der Umgehungskanal 35' verschlossen ist. Übersteigt eine Druckdifferenz zwischen Rohseite 10 und Reinseite 11 des Filters 1 einen vorgebbaren Wert, dann öffnet das Filterumgehungsventil 5 und es wird eine unmittelbare Strömungsverbindung zwischen Rohseite 10 und Reinseite 11 des Filters 1 geschaffen, die den Filterstoffkörper 30 umgeht.

Auch bei dem Beispiel nach Figur 36 kann der Ventilkörper 53 zusätzlich die Funktion eines Sperrelements einer Montagesperre gegen den Einbau von Fremd-Filtereinsätzen haben, wie weiter oben schon erläutert.

**Bezugszeichenliste:**

| Zeichen | Bezeichnung |
|---|---|
| 1 | Flüssigkeitsfilter |
| 10 | Rohseite |
| 10' | Einlass |
| 11 | Reinseite |
| 11' | Auslass |
| | |
| 2 | Filtergehäuse |
| 21 | Deckel |
| 22 | Verschraubung |
| 22' | Dichtung in 22 |
| 23 | Ablass- und/oder Entlüftungsschraube |
| 23' | Dichtung an 23 |
| 24 | Rastring an 21 |
| 25 | Boden von 2 |
| 25' | hohlzylindrischer Bodenteil |
| 26 | Dichtfläche in 25' |
| 27 | Einschrauböffnung in 21 für 23 |
| 28 | Ringspalt |
| 29 | Flansch |
| | |
| 3 | Filtereinsatz |
| 30 | Filterstoffkörper |
| 30' | Stützgitter in 30 |
| 31 | erste (obere) Stirnscheibe |
| 31' | zentrale Durchbrechung in 31 |
| 32 | zweite (untere) Stirnscheibe |
| 32' | zentrale Durchbrechung in 32 |
| 33 | Entriegelungsmittel (Nasen) |
| 34 | Rastzungen an 31 |
| 35 | Kragen an 31, 32 |
| 35' | Umgehungskanal |
| 36 | Dichtung an 35 zwischen 10 und 11 |
| | |
| 4 | Standrohr |
| 40 | Riegeleinrichtung |
| 41 | Riegelarme |
| 41' | Riegelhaken |
| 42 | Flüssigkeitsablaufkanal in 4 |
| 43 | Entriegelungsnocken |
| 47 | Führungen |
| | |
| 5 | Filterumgehungsventil |
| 50 | Ventilsitz |
| 51, 52 | Dichtkonturen (außen, innen) |
| 53 | Ventilkörper |
| 53' | Dichtbereich an 53 |
| 54 | Feder |
| 54' | Federstütze |
| 55 | Elastomerauflage an 53 |
| 56 | zusammengefasster Dichtring |
| 57 | Führungsvorsprung |

## Patentansprüche

1. Flüssigkeitsfilter (1), insbesondere Ölfilter oder Kraftstofffilter für eine Brennkraftmaschine, mit einem Gehäuse (2) mit einem abnehmbaren Deckel (21), mit einem in eine Rohseite (10) des Flüssigkeitsfilters (1) einmündenden Einlass (10') für zu filternde Flüssigkeit und einem von einer Reinseite (11) des Flüssigkeitsfilters (1) ausgehenden Auslass (11') für gefilterte Flüssigkeit, mit einem die Rohseite (10) und die Reinseite (11) voneinander trennenden, auswechselbaren Filtereinsatz (3) aus einem stirnseltig von zwei Endscheiben (31, 32) eingefassten hohlzylindrischen Filterstoffkörper (30) und mit einem Filterumgehungsventil (5), bestehend aus einem am Filtereinsatz (3) angeordneten Ventilsitz (50) und einem mit dem Ventilsitz (50) zusammenwirkenden, durch eine Vorbelastungskraft in Schließrichtung beaufschlagten Ventilkörper (53), wobei zwischen dem Ventilsitz (50) und dem Ventilkörper (53) zwei in Radialrichtung gesehen ineinander angeordnete, geschlossene Dichtkonturen (51, 52) vorgesehen sind und wobei durch den Ventilsitz (50) zwischen den Dichtkonturen (51, 52) wenigstens ein die Rohseite (10) und die Reinseite (11) des Flüssigkeitsfilters (1) unter Umgehung des Filterstoffkörpers (30) verbindender Umgehungskanal (35') verläuft,
**dadurch gekennzeichnet,**
**dass** der Ventilkörper (53) im Filtergehäuse (2) an einem Filtergehäuseteil verschieblich geführt ist,
**dass** die zwei Dichtkonturen (51, 52) in Axialrichtung gegeneinander versetzt sind und
**dass** der Ventilkörper (53) In seinem mit den Dichtkonturen (51, 52) zusammenwirkenden Dichtbereich (53') eine entsprechende konische oder kegelige oder kalottenartige Form hat.

2. Flüssigkeitsfilter (1), insbesondere Ölfilter oder Kraftstofffilter für eine Brennkraftmaschine, mit einem Gehäuse (2) mit einem abnehmbaren Deckel (21), mit einem in eine Rohseite (10) des Flüssigkeitsfilters (1) einmündenden Einlass (10') für zu filternde Flüssigkeit und einem von einer Reinseite (11) des Flüssigkeitsfilters (1) ausgehenden Auslass (11') für gefilterte Flüssigkeit, mit einem die Rohseite (10) und die Reinseite (11) voneinander trennenden, auswechselbaren Filtereinsatz (3) aus einem stirnseitig von zwei Endscheiben (31, 32) eingefassten hohlzylindrischen Filterstoffkörper (30) und mit einem Filterumgehungsventil (5), bestehend aus einem am Filtereinsatz (3) angeordneten Ventilsitz (50) und einem mit dem Ventilsitz (50) zusammenwirkenden, durch eine Vorbelastungskraft in Schließrichtung beaufschlagten Ventilkörper (53), wobei zwischen dem Ventilsitz (50) und dem Ventilkörper (53) zwei in Radialrichtung gesehen ineinander angeordnete, geschlossene Dichtkonturen (51, 52) vorgesehen sind und wobei durch den Ventilsitz (50) zwischen den Dichtkonturen (51, 52) wenigstens ein die Rohseite (10) und die Reinseite (11) des Flüssigkeitsfilters (1) unter Umgehung des Filterstoffkörpers (30) verbindender Umgehungskanal (35') verläuft,
**dadurch gekennzeichnet,**
**dass** der Ventilkörper (53) im Filtergehäuse (2) an einem Filtergehäuseteil verschieblich geführt ist und
**dass** der Ventilkörper (53) zugleich ein Sperrelement einer Montagesperre gegen den Einbau von Fremd-Filtereinsätzen bildet, wobei eine den Ventilkörper (53) gegen eine axiale Verschiebung sperrende Riegeleinrichtung (40) vorgesehen ist, die bei einem Einbauen eines Filtereinsatzes (3) nur durch passende Entriegelungsmittel (33) an einem zugehörigen Filtereinsatz (3) entriegelbar ist.

3. Flüssigkeitsfilter nach Anspruch 1 oder 2, **dadurch gekennzeichnet, dass** er als stehender Filter (1) ausgeführt ist, dass der Ventilsitz (50) an einer im Einbauzustand oberen Stirnscheibe (31) des Filtereinsatzes (3) angeordnet ist und dass der Ventilkörper (53) oben an einem in oder durch den Filtereinsatz (3) verlaufenden, mit dem Filtergehäuse (2) verbundenen oder einstückigen Standrohr (4) geführt ist.

4. Flüssigkeitsfilter nach Anspruch 1 oder 2, **dadurch gekennzeichnet, dass** er als stehender Filter (1) ausgeführt ist, dass der Ventilsitz (50) an einer im Einbauzustand unteren Stirnscheibe (32) des Filtereinsatzes (3) angeordnet ist und dass der Ventilkörper (53) unten an einem in oder durch den Filtereinsatz (3) verlaufenden, mit dem Filtergehäuse (2) verbundenen oder einstückigen Standrohr (4) geführt ist.

5. Flüssigkeitsfilter nach Anspruch 1 oder 2, **dadurch gekennzeichnet, dass** er als hängender Filter (1) ausgeführt ist, dass der Ventilsitz (50) an einer im Einbauzustand unteren Stirnscheibe (32) des Filtereinsatzes (3) angeordnet ist und dass der Ventilkörper (53) in dem das Filtergehäuse (2) unterseitig verschließenden Deckel (21) geführt ist.

6. Flüssigkeitsfilter nach Anspruch 1 oder 2, **dadurch gekennzeichnet, dass** er als hängender Filter (1) ausgeführt ist, dass der Ventilsitz (50) an einer im Einbauzustand oberen Stirnscheibe (31) des Filtereinsatzes (3) angeordnet ist und dass der Ventilkörper (53) in dem Filtergehäuse (2) oberhalb des Filtereinsatzes (3) geführt ist.

7. Flüssigkeitsfilter nach einem der Ansprüche 1 bis 6, **dadurch gekennzeichnet, dass** die beiden Dichtkonturen (51, 52) rund ausgeführt und konzentrisch zueinander angeordnet sind.

8. Flüssigkeitsfilter nach einem der Ansprüche 1 bis 7, **dadurch gekennzeichnet, dass** eine die Rohseite (10) und die Reinseite (11) des Flüssigkeitsfilters (1) voneinander trennende Dichtung (36) zwischen dem Filtergehäuse (2) und dem Filtereinsatz (3) an derselben Stirnscheibe (31 oder 32) des Filtereinsatzes (3) wie die Dichtkonturen (51, 52) des Filterumgehungsventils (5) angeordnet ist.

9. Flüssigkeitsfilter nach einem der Ansprüche 1 bis 8, **dadurch gekennzeichnet, dass** der Filtereinsatz (3) an der den Ventilsitz (50) aufweisenden Stirnscheibe (31 oder 32) einen axial und schräg radial nach außen verlaufenden Kragen (35) aufweist, dessen axial nach außen weisende Seite den Ventilsitz (50) mit den zwei Dichtkonturen (51, 52) bildet, und dass durch den Kragen (35) zwischen den Dichtkonturen (51, 52) der mindestens eine Umgehungskanal (35') verläuft.

10. Filtereinsatz (3) für einen Flüssigkeitsfilter (1) nach einem der vorhergehenden Ansprüche, insbesondere Ölfilter oder Kraftstofffilter für eine Brennkraftmaschine, mit einem stirnseitig von zwei Endscheiben (31, 32) eingefassten hohlzylindrischen Filterstoffkörper (30) und mit einem an einer der Stirnscheiben (31 oder 32) angeordneten Ventilsitz (50) eines Filterumgehungsventils (5) mit zwei in Radialrichtung gesehen ineinander angeordneten, geschlossenen Dichtkonturen (51, 52), wobei durch den Ventilsitz (50) zwischen den Dichtkonturen (51, 52) wenigstens ein den Filterstoffkörper (30) umgehender Umgehungskanal (35') verläuft,
**dadurch gekennzeichnet,**
**dass** der Filtereinsatz (3) ventilkörperfrei ausgeführt ist.

11. Filtereinsatz nach Anspruch 10, **dadurch gekennzeichnet, dass** die zwei Dichtkonturen (51, 52) in Axialrichtung gegeneinander versetzt sind.

12. Filtereinsatz nach Anspruch 10 oder 11, **dadurch gekennzeichnet, dass** die beiden Dichtkonturen (51, 52) rund ausgeführt und konzentrisch zueinander angeordnet sind.

13. Filtereinsatz nach einem der Ansprüche 10 bis 12, **dadurch gekennzeichnet, dass** die Dichtkonturen (51, 52) an die zugehörige Endscheibe (31, 32) einstückig angeformt oder an diese angespritzt sind.

14. Filtereinsatz nach einem der Ansprüche 10 bis 13, **dadurch gekennzeichnet, dass** eine im eingebauten Zustand des Filtereinsatzes (3) eine Rohseite (10) und eine Reinseite (11) des Flüssigkeitsfilters (1) voneinander trennende Dichtung (36) an derselben Stirnscheibe (31 oder 32) des Filtereinsatzes (3) wie die Dichtkonturen (51, 52) des Filterumgehungsventils (5) angeordnet ist.

15. Filtereinsatz nach Anspruch 14, **dadurch gekennzeichnet, dass** die Dichtung (36) zwischen der Rohseite (10) und der Reinseite (11) mit mindestens einer der Dichtkonturen (51, 52) zu einem Dichtring (56) zusammengefasst ist.

16. Filtereinsatz nach einem der Ansprüche 10 bis 15, **dadurch gekennzeichnet, dass** der Filtereinsatz (3) an der den Ventilsitz (50) aufweisenden Stirnscheibe (31 oder 32) einen axial und schräg radial nach außen verlaufenden Kragen (35) aufweist, dessen axial nach außen weisende Seite den Ventilsitz (50) mit den zwei Dichtkonturen (51, 52) bildet, und dass durch den Kragen (35) zwischen den Dichtkonturen (51, 52) der mindestens eine Umgehungskanal (35') verläuft.

17. Filtereinsatz nach einem der Ansprüche 10 bis 16, **dadurch gekennzeichnet, dass** an dem Filtereinsatz (3) Entriegelungsmittel (33) vorgesehen sind, mittels welchen bei einem Einbauen des Filtereinsatzes (3) in einen zugehörigen Flüssigkeitsfilter (1) eine Riegeleinrichtung (40) entriegelbar ist, die einen zugleich ein Sperrelement einer Montagesperre gegen den Einbau von Fremd-Filtereinsätzen bildenden Ventilkörper (53) gegen axiale Verschiebung sperrt.

18. Filtereinsatz nach Anspruch 17, **dadurch gekennzeichnet, dass** die Entriegelungsmittel (33) durch eine oder mehrere radial nach innen weisende Nasen gebildet sind, die am Innenumfang einer zentralen Durchbrechung (32') in einer der Stirnscheiben (31, 32) angeordnet sind.

19. Filtereinsatz nach Anspruch 17 oder 18, **dadurch gekennzeichnet, dass** die zwei Dichtkonturen (51, 52) und die Entriegelungsmittel (33) alle an einer der zwei Endscheiben (31 oder 32) des Filtereinsatzes (3) vorgesehen sind.

## Claims

1. A liquid filter (1), in particular an oil filter or a fuel filter for an internal combustion engine, comprising a housing (2) having a removable cover (21), an inlet (10') for liquid to be filtered which opens into an unfiltered side (10) of the liquid filter and an outlet (11') for filtered liquid which starts from a filtered side (11) of the liquid filter (1), a replaceable filter insert (3) that separates the unfiltered side (10) and the filtered side (11) from one another and is composed of a hollow-cylindrical filter cloth element (30) framed at the end faces by two end caps (31, 32), a filter bypass valve (5), comprising a valve seat (50) disposed on the filter insert (3) and a valve body (53) that cooperates with the valve seat (50) and is acted upon by a preload force in the closing direction, two closed sealing contours (51, 52) that are disposed one inside the other as seen in the radial direction being provided between the valve seat (50) and the valve body (53), and at least one bypass channel (35'), which connects the unfiltered side (10) and the filtered side (11) of the liquid filter (1) bypassing the filter cloth element (30), passing through the valve seat (50) between the sealing contours (51, 52),
**characterised in that**
the valve body (53) is displaceably guided in the filter housing (2) on a filter housing part,
the two sealing contours (51, 52) are offset from one another in the axial direction, and
the valve body (53) in the sealing area (53') thereof cooperating with the sealing contours (51, 52) has a corresponding conical or tapered or domed shape.

2. A liquid filter (1), in particular an oil filter or a fuel filter for an internal combustion engine, comprising a housing (2) having a removable cover (21), an inlet (10') for liquid to be filtered which opens into an unfiltered side (10) of the liquid filter and an outlet (11') for filtered liquid which starts from a filtered side (11) of the liquid filter (1), a replaceable filter insert (3) that separates the unfiltered side (10) and the filtered side (11) from one another and is composed of a hollow-cylindrical filter cloth element (30) framed at the end faces by two end caps (31, 32), a filter bypass valve (5), comprising a valve seat (50) disposed on the filter insert (3) and a valve body (53) that cooperates with the valve seat (50) and is acted upon by a preload force in the closing direction, two closed sealing contours (51, 52) that are disposed one inside the other as seen in the radial direction being provided between the valve seat (50) and the valve body (53), and at least one bypass channel (35'), which connects the unfiltered side (10) and the filtered side (11) of the liquid filter (1) bypassing the filter cloth element (30), passing through the valve seat (50) between the sealing contours (51, 52),
**characterised in that**
the valve body (53) is displaceably guided in the filter housing (2) on a filter housing part, and
the valve body (53) simultaneously forms a blocking element of a mounting block to prevent the installation of third-party filter inserts, a locking device (40) blocking the valve body (53) against an axial displacement being provided, which during installation of a filter insert (3) can only be unlocked by matching unlocking means (33) on an associated filter insert (3).

3. The liquid filter according to claim 1 or 2, **characterised in that** the filter is designed as a standing filter (1), the valve seat (50) is disposed on an end cap (31) of the filter insert (3) which is at the top in the installed state, and the valve body (53) is guided at the top on a standpipe (4) that extends in or through the filter insert (3) and is connected to the filter housing (3) or integral therewith.

4. The liquid filter according to claim 1 or 2, **characterised in that** the filter is designed as a standing filter (1), the valve seat (50) is disposed on an end cap (32) of the filter insert (3) which is at the bottom in the installed state, and the valve body (53) is guided at the bottom on a standpipe (4) that extends in or through the filter insert (3) and is connected to the filter housing (3) or integral therewith.

5. The liquid filter according to claim 1 or 2, **characterised in that** the filter is designed as a hanging filter (1), the valve seat (50) is disposed on an end cap (32) of the filter insert (3) which is at the bottom in the installed state, and the valve body (53) is guided in the cover (21) closing the filter housing (2) at the bottom.

6. The liquid filter according to claim 1 or 2, **characterised in that** the filter is designed as a hanging filter (1), the valve seat (50) is disposed on an end cap (31) of the filter insert (3) which is at the top in the installed state, and the valve body (53) is guided in the filter housing (2) above the filter insert (3).

7. The liquid filter according to any one of claims 1 to 6, **characterised in that** the two sealing contours (51, 52) are round and disposed concentrically to one another.

8. The liquid filter according to any one of claims 1 to 7, **characterised in that** a seal (36) separating the unfiltered side (10) and the filtered side (11) of the liquid filter (1) from one another is disposed between the filter housing (2) and the filter insert (3) on the same end cap (31 or 32) of the filter insert (3) as the sealing contours (51, 52) of the filter bypass valve (5).

9. The liquid filter according to any one of claims 1 to 8, **characterised in that** the filter insert (3) on the end cap (31 or 32) comprising the valve seat (50) has an axially and obliquely radially outwardly extending flange (35), of which the axially outwardly directed side forms the valve seat (50) with the two sealing contours (51, 52), and the at least one bypass channel (35') passes through the flange (35) between the sealing contours (51, 52).

10. A filter insert (3) for a liquid filter (1) according to any one of the preceding claims, in particular an oil filter or a fuel filter for an internal combustion engine, comprising a hollow-cylindrical filter cloth element (30) framed at the end faces by two end caps (31, 32), and a valve seat (50) of a filter bypass valve (5) which is disposed on one of the end caps (31 or 32) and has two closed sealing contours (51, 52) disposed one inside the other as seen in the radial direction, at least one bypass channel (35') that bypasses the filter cloth element (35') passing through the valve seat (50) between the sealing contours (51, 52)
**characterised in that**
the filter insert (3) is designed without a valve body.

11. The filter insert according to claim 10, **characterised in that** the two sealing contours (51, 52) are offset from one another in the axial direction.

12. The filter insert according to claim 10 or 11, **characterised in that** the two sealing contours (51, 52) are round and disposed concentrically to one another.

13. The filter insert according to any one of claims 10 to 12, **characterised in that** the sealing contours (51, 52) are integrally moulded as part of the associated end cap (31, 32) or moulded onto the same.

14. The filter insert according to any one of claims 10 to 13, **characterised in that** a seal (36) separating an unfiltered side (10) and a filtered side (11) of the liquid filter (1) from one another in the installed state of the filter insert (3) is disposed on the same end cap (31 or 32) of the filter insert (3) as the sealing contours (51, 52) of the filter bypass valve (5).

15. The filter insert according to claim 14, **characterised in that** the seal (36) between the unfiltered side (10) and the filtered side (11) is combined with at least one of the sealing contours (51, 52) to form a sealing ring (56).

16. The filter insert according to any one of claims 10 to 15, **characterised in that** the filter insert (3) on the end cap (31 or 32) comprising the valve seat (50) has an axially and obliquely radially outwardly extending flange (35), of which the axially outwardly directed side forms the valve seat (50) with the two sealing contours (51, 52), and the at least one bypass channel (35') passes through the flange (35) between the sealing contours (51, 52).

17. The filter insert according to any one of claims 10 to 16, **characterised in that** unlocking means (33) are provided on the filter insert (3), by means of which, during an installation of the filter insert (3) in an associated liquid filter (1), a locking device (40) can be unlocked, which blocks a valve body (53) against axial displacement, which valve body (53) simultaneously forms a blocking element of a mounting block to prevent the installation of third-party filter inserts.

18. The filter insert according to claim 17, **characterised in that** the unlocking means (33) are formed by one or more radially inwardly directed lugs disposed on an inner periphery of a central aperture (32') in one of the end caps (31, 32).

19. The filter insert according to claim 17 or 18, **characterised in that** the two sealing contours (51, 52) and the unlocking means (33) are all provided on one of the two end caps (31 or 32) of the filter insert (3).

## Revendications

1. Filtre à liquides (1), notamment un filtre à huile ou un filtre à carburant pour un moteur à combustion, comprenant un boîtier (2) équipé d'un couvercle amovible (21), une entrée (10') pour le liquide à filtrer débouchant dans un côté brut (10) du filtre à liquides (1) et une sortie (11') pour le liquide filtré partant d'un côté pur (11) du filtre à liquides (1), un insert de filtre interchangeable (3), séparant le côté brut (10) et le côté pur (11) l'un de l'autre, constitué d'un corps filtrant (30) cylindrique creux bordé frontalement par deux plaques d'extrémité (31, 32), et une soupape de dérivation de filtre (5) constituée d'un siège de soupape (50) agencé sur l'insert de filtre (3) et d'un corps de soupape (53) coopérant avec le siège de soupape (50), poussé dans la direction de fermeture par une force de précharge, deux contours d'étanchéité fermés (51, 52) agencés l'un dans l'autre - vue en direction radiale - étant prévus entre le siège de soupape (50) et le corps de soupape (53) et au moins un canal de dérivation (35') qui relie le côté brut (10) et le côté pur (11) du filtre à liquides (1) en contournant le corps filtrant (30) passant au travers du siège de soupape (50) entre les contours d'étanchéité (51, 52),
**caractérisé en ce,**
**que** le corps de soupape (53) est monté mobile dans le boîtier de filtre (2) sur une partie du boîtier de filtre,
**que** les deux contours d'étanchéité (51, 52) sont décalés l'un par rapport à l'autre dans la direction axiale et
**que** le corps de soupape (53) a une forme conique ou tronconique ou de type calotte appropriée dans sa zone d'étanchéité (53') coopérant avec les contours d'étanchéité (51, 52).

2. Filtre à liquides (1), notamment un filtre à huile ou un filtre à carburant pour un moteur à combustion, comprenant un boîtier (2) équipé d'un couvercle amovible (21), une entrée (10') pour le liquide à filtrer débouchant dans un côté brut (10) du filtre à liquides (1) et une sortie (11') pour le liquide filtré partant d'un côté pur (11) du filtre à liquides (1), un insert de filtre interchangeable (3), séparant le côté brut (10) et le côté pur (11) l'un de l'autre, constitué d'un corps filtrant (30) cylindrique creux bordé frontalement par deux plaques d'extrémité (31, 32), et une soupape de dérivation de filtre (5) constituée d'un siège de soupape (50) agencé sur l'insert de filtre (3) et d'un corps de soupape (53) coopérant avec le siège de soupape (50), poussé dans la direction de fermeture par une force de précharge, deux contours d'étanchéité fermés (51, 52) agencés l'un dans l'autre - vue en direction radiale - étant prévus entre le siège de soupape (50) et le corps de soupape (53) et au moins un canal de dérivation (35') qui relie le côté brut (10) et le côté pur (11) du filtre à liquides (1) en contournant le corps filtrant (30) passant au travers du siège de soupape (50) entre les contours d'étanchéité (51, 52),
**caractérisé en ce,**
**que** le corps de soupape (53) est monté mobile dans le boîtier de filtre (2) sur une partie du boîtier de filtre et
**que** le corps de soupape (53) forme en même temps un élément de blocage d'un blocage de montage contre le montage d'inserts de filtre étrangers, un dispositif de verrouillage (40) étant prévu pour bloquer le corps de soupape (53) contre un déplacement axial, ledit dispositif de verrouillage (40) pouvant uniquement être déverrouillé lors du montage d'un insert de filtre (3) par des moyens de déverrouillage (33) adaptés d'un insert de filtre correspondant (3).

3. Filtre à liquides selon la revendication 1 ou 2, **caractérisé en ce, qu'**il soit réalisé en tant que filtre (1) debout, que le siège de soupape (50) soit agencé en état monté à une plaque d'extrémité supérieure (31) de l'insert de filtre (3) et que le corps de soupape (53) soit guidé en haut à un tube (4), qui chemine dans ou à travers l'insert de filtre (3) et qui est lié au boîtier de filtre (2) ou formé par une pièce individuelle.

4. Filtre à liquides selon la revendication 1 ou 2, **caractérisé en ce, qu'**il soit réalisé en tant que filtre (1) debout, que le siège de soupape (50) soit agencé en état monté à une plaque d'extrémité inférieure (32) de l'insert de filtre (3) et que le corps de soupape (53) soit guidé en bas à un tube (4), qui chemine dans ou à travers l'insert de filtre (3) et qui est lié au boîtier de filtre (2) ou formé par une pièce individuelle.

5. Filtre à liquides selon la revendication 1 ou 2, **caractérisé en ce, qu'**il soit réalisé en tant que filtre (1) suspendu, que le siège de soupape (50) soit agencé en état monté à une plaque d'extrémité inférieure (32) de l'insert de filtre (3) et que le corps de soupape (53) soit guidé dans le couvercle (21) qui ferme sur le coté inférieur le boîtier de filtre (2).

6. Filtre à liquides selon la revendication 1 ou 2, **caractérisé en ce, qu'**il soit réalisé en tant que filtre (1) suspendu, que le siège de soupape (50) soit agencé en état monté à une plaque d'extrémité supérieure (31) de l'insert de filtre (3) et que le corps de soupape (53) soit guidé dans le boîtier de filtre (2) au dessus de l'insert de filtre (3).

7. Filtre à liquides selon l'une des revendications 1 à 6, **caractérisé en ce, que** les deux contours d'étanchéité (51, 52) soient de forme circulaire et qu'ils soient agencés de manière concentrique entre eux.

8. Filtre à liquides selon l'une des revendications 1 à 7, **caractérisé en ce, qu'**un joint (36) séparant le côté brut (10) et le côté pur (11) entre eux du filtre à liquides (1) entre le boîtier de filtre (2) et l'insert de filtre (3) soit agencé à la même plaque d'extrémité (31 ou 32) de l'insert de filtre (3) que les contours d'étanchéité (51, 52) de la soupape de dérivation de filtre (5).

9. Filtre à liquides selon l'une des revendications 1 à 8, **caractérisé en ce, que** l'insert de filtre (3) comporte à la plaque d'extrémité (31 ou 32), qui comporte elle même le siège de soupape (50), un col (35) s'étendant vers l'extérieur dans le sens axial et de manière oblique dans le sens radial,le côté dirigé de manière axiale vers l'extérieur dudit col formant le siège de soupape (50) avec les deux contours d'étanchéité (51, 52), et que l'au-moins un canal de dérivation (35') chemine à travers le col (35) entre les contours d'étanchéité (51, 52).

10. Insert de filtre (3) pour un filtre à liquides (1) selon l'une des revendications précédentes, notamment un filtre à huile ou un filtre à carburant pour un moteur à combustion, constitué d'un corps filtrant (30) cylindrique creux bordé frontalement par deux plaques d'extrémité (31, 32) et avec sur l'une des plaques d'extrémité (31 ou 32) un siège de soupape (50) d'une soupape de dérivation de filtre (5) avec - en vue en direction radiale - deux contours d'étanchéité fermés (51, 52) agencés l'un dans l'autre, et dont au moins un canal de dérivation (35') passe au travers du siège de soupape (50) entre les contours d'étanchéité (51, 52) en contournant le corps filtrant (30),
**caractérisé en ce,**
**que** l'insert de filtre (3) soit conçu de sorte qu'il soit libre par rapport au corps de la soupape.

11. Insert de filtre selon la revendication 10, **caractérisé en ce, que** les deux contours d'étanchéité (51, 52) soient décalés l'un par rapport à l'autre dans le sens axial.

12. Insert de filtre selon la revendication 10 ou 11, **caractérisé en ce, que** les deux contours d'étanchéité (51, 52) soient de forme circulaire et qu'ils soient agencés de manière concentrique entre eux.

13. Insert de filtre selon l'une des revendications 10 à 12, **caractérisé en ce, que** les contours d'étanchéité (51, 52) soient contremoulés d'un seul tenant à la plaque d'extrémité (31, 32) correspondante ou qu'ils soient intégrés à celle-ci par modélisation ou injection.

14. Insert de filtre selon l'une des revendications 10 à 13, **caractérisé en ce, qu'**en l'état monté de l'insert de filtre (3), un joint (36) séparant un côté brut (10) et un côté pur (11) du filtre à liquides (1) entre eux soit agencé à la même plaque d'extrémité (31 ou 32) de l'insert de filtre (3) que les contours d'étanchéité (51, 52) de la soupape de dérivation de filtre (5).

15. Insert de filtre selon la revendication 14, **caractérisé en ce, qu'**entre le côté brut (10) et le côté pur (11), le joint (36) soit réuni avec au moins un des contours d'étanchéité (51, 52) pour former une bague d'étanchéité (56).

16. Insert de filtre selon l'une des revendications 10 à 15, **caractérisé en ce, que** l'insert de filtre (3) comporte à la plaque d'extrémité (31 ou 32), qui comporte elle même le siège de soupape (50), un col (35) s'étendant vers l'extérieur dans le sens axial et de manière oblique dans le sens radial,le côté dirigé de manière axiale vers l'extérieur dudit col formant le siège de soupape (50) avec les deux contours d'étanchéité (51, 52), et que l'au-moins un canal de dérivation (35') chemine à travers le col (35) entre les contours d'étanchéité (51, 52).

17. Insert de filtre selon l'une des revendications 10 à 16, **caractérisé en ce, qu'**à l'insert de filtre (3) soient prévus des moyens de déverrouillage (33) qui, lors du montage de l'insert de filtre (3) dans un filtre à liquides (1) correspondant, permettent de déverrouiller un dispositif de verrouillage (40), qui bloque un corps de soupape (53) contre un déplacement axial, ce corps de soupape formant en même temps un élément de blocage d'un blocage de montage contre le montage d'inserts de filtre étrangers.

18. Insert de filtre selon la revendication 17, **caractérisé en ce, que** les moyens de déverrouillage (33) soient formés par une ou plusieurs languettes qui sont dirigées dans le sens radial vers l'intérieur et qui sont agencées sur le pourtour intérieur d'un évidement central (32) sur une des plaques d'extrémité (31, 32).

19. Insert de filtre selon la revendication 17 ou 18, **caractérisé en ce, que** les deux contours d'étanchéité (51, 52) et les moyens de déverrouillage (33) soient tous prévus sur une des deux plaques d'extrémité (31 ou 32) de l'insert de filtre (3).
